Europäisches Patentamt

(19) European Patent Office

Office européen des brevets

(11) **EP 0 933 963 A2**

(12) **EUROPEAN PATENT APPLICATION**

(43) Date of publication:
04.08.1999 Bulletin 1999/31

(51) Int. Cl.⁶: **H04Q 11/00**

(21) Application number: 99101456.4

(22) Date of filing: 27.01.1999

(84) Designated Contracting States:
AT BE CH CY DE DK ES FI FR GB GR IE IT LI LU
MC NL PT SE
Designated Extension States:
AL LT LV MK RO SI

(30) Priority: 30.01.1998 US 73314 P
30.01.1998 US 73398 P
11.01.1999 US 227939 P
11.01.1999 US 227857 P
11.01.1999 US 227856 P
11.01.1999 CA 2258353
11.01.1999 CA 2258333
11.01.1999 CA 2258335

(71) Applicant: JDS FITEL INC.
Nepean, Ontario K2G 5W8 (CA)

(72) Inventors:
• Lagali, Neil S.
Brantford, Ontario N3R 5J5 (CA)
• MacDonald, Ian
Manotick, Ontario (CA)
• Paiam, Reza
Ottawa, Ontario K1V 9V8 (CA)

(74) Representative:
Frei, Alexandra Sarah
Frei Patentanwaltsbüro
Postfach 768
8029 Zürich (CH)

(54) **Optical variable-ratio power splitter and optical switches**

(57) A variable-ratio optical splitter for dividing a beam of light launched into an input arm of a Mach-Zehnder interferometer into a plurality of sub-beams, each sub-beam having a predetermined intensity is disclosed. A transfer matrix is used to derive analytical expressions for an intensity distribution at the output ports of an integrated optical $N \times N$ generalized Mach-Zehnder interferometer. The analytical expressions for the intensity distribution are a function of one or more phase shifts applied to linking arms of two multimode interference couplers that form the Mach-Zehnder interferometer. These expressions form a system of nonlinear equations that are numerically solved for the phase shifts required, to achieve a specified intensity distribution for variable-ratio power splitting. In addition, Combinations of optically coupled Generalized Mach-Zehnder Interferometers (GMZIs) result in switches of greater switching capacity than an isolated GMZI. The result is an optical switch, which is operated using a smaller number of control elements and control levels than the generalized Mach-Zehnder interferometer alone. In a preferred form, the present invention provides a balanced non-blocking switch by using symmetrical configurations of optically coupled GMZIs, and also provides a cascaded non-blocking switch by cascading an $N \times N$ GMZI with a $(N - 1) \times (N - 1)$ non-blocking switch.

Figure 2.

## Description

### Field of the Invention

This invention relates generally to optical communication systems and the like. In particular, the invention relates to routing optical beams using integrated optical components.

### Background of the Invention

As we move towards the realization of optical routing in fiber optic networks, it is becoming increasingly important to provide signal-processing functions such as switching and splitting, in optical form at the network nodes. Optical switching and splitting are expected to become more and more important as wavelength division multiplexing reaches further into networks, greatly expanding the number of optical paths available. By using integrated optical components to perform the network node routing functions, advantages in terms of functionality, size, speed, and efficiency are achievable.

Multimode interference (MMI) couplers, based on the self-imaging effect in slab waveguides are key components In integrated optics. MMIs function as efficient splitters and combiners of optical beams, while possessing a host of advantageous characteristics, such as, low excess losses, low crosstalk, accurate splitting ratios, small device size, and good fabrication tolerances. Furthermore Pennings, *et al.* have shown that these features can be maintained independent of polarization, and for operation over a broad range of wavelengths and temperatures, in a paper entitled " Ultracompact, low-loss directional couplers on InP based on self-imaging by multimode interference," published in *Appl. Phys. Lett.*, vol. 59, pp. 1926-1928, 1991; and Besse, *et al*, in a paper entitled " Optical Bandwidth and Fabrication Tolerances of Multimode Interference Couplers," *J. Lightwave Technol.*, vol. 12, no. 6, pp. 1004-1009, June 1994. All references in this document are herein incorporated by reference.

Owing to their superior performance, MMI couplers have been utilized as building blocks in more complex devices. One such device is an integrated optical space switch. The integrated optical space switch consists of an active phase shifting region disposed between two MMI couplers, and can be regarded as a generalized, multiple-arm, Mach-Zehnder interferometer (GMZI). In this GMZI , the first MMI coupler produces $N$ self-images in the arms, each image with differing relative phase. Through active control of the relative phases of images within the arms, the combining of the images in the second MMI coupler is controlled so that the light intensity is switched between the $N$ GMZI outputs.

The phase transfer function of the MMI coupler has previously been used to design $1 \times N$ GMZI switches and to analyze the active phase shifting requirements for the switch states; this is disclosed by Jenkins *et al.*, in a paper entitled " Novel $1 \times N$ and $N \times N$ integrated optical switches using self-imaging multimode GaAs/AlGaAs waveguides," in *Appl. Phys. Lett.*, vol. 64, no. 6, pp. 684-686, Feb. 1994; and by Besse, *et al.*, in a paper entitled " The integrated prism interpretation of multi-leg Mach-Zehnder interferometers based on multimode interference couplers," in *Opt. Quant. Electron.*, vol. 27, pp. 909-920, 1995.

Notwithstanding, a general theory has not been developed incorporating both the switching and power-splitting capabilities of this important class of devices.

The theory of the GMZI is based primarily upon the phase transfer function of the MMI coupler. Since the MMI coupler is capable of imaging any of $N$ light beams launched into N input ports to all $N$ output ports, the phase transfer function of an $N \times N$ coupler can be described by an $N \times N$ matrix of relative phase factors. This matrix is used to form a transfer matrix for the coupler. The transfer matrix formalism was first applied to directional couplers in microwave circuits; for example see, Montgomery *et al.,*, eds., *Principles of Microwave Circuits*, 1st Edition. New York: McGraw-Hill, 1948, pp. 146-151, 299-303, and R. Levy, in L. Young, ed., *Advances in Microwaves.* New York: Academic Press, 1966, pp. 118-128.

The transfer matrix formalism has subsequently been applied to integrated optical two-port directional couplers; this is described by Verbeek *et al.,* in " Integrated Four-Channel Mach-Zehnder Multi/Demultiplexer Fabricated with Phosphorous Doped $SiO_2$ Waveguides on Si," *J. Lightwave Technol.*, vol. 6, no. 6, pp. 1011-1015, June 1988, and Jinguji *et al.*, in " Synthesis of Coherent Two-Port Lattice-Form Optical Delay-Line Circuit," *J. Lightwave Technol.*, vol. 13, no. 1, pp. 73-82, Jan. 1995. Jenkins *et al.* (see above) described the MMI coupler using the transfer matrix, but only gave the matrix for $N = 4$, and its use was limited to the determination of the phase shift requirements for a GMZI switch.

In general, a GMZI switch is manufactured for use in intrinsic switch states, i.e., where light from an input port is switched to any one of $N$ output ports. There are $N$ distinct intrinsic switch states for a $P \times N$ GMZI device comprised of a first splitting $P \times N$ MMI and a second combining $N \times N$ MMI, i.e., each state corresponding to the light provided to an input port emerging substantially from one of the $N$ output ports. The intrinsic switch states can be determined in the following manner.

(i) The tight input into the first splitting $P \times N$ MMI coupler is split into $N$ sub-beams, with differing relative phases, i.e., a certain phase distribution.

(ii) The phase distribution is unique to the single port from which the light is launched, so there are $P$ distinct phase distributions for the first $P$ x $N$ MMI coupler. In the second combining $N$ x $N$ MMI coupler, there are $N$ distinct phase distributions.

(iii) The MMI coupler functions in a reciprocal manner, i.e., as a combiner, with sub-beams launched into all of its input ports combining to provide light to a single desired output port, if and only if the phases of these sub-beams correspond to the negative of the phase distribution for an identical MMI splitter in which the input port number is the same as the number of the out put port of the combiner from which it is desired that output light emerges.

(iv) The phase distributions of light emerging from the MMI coupler for light launched into a given port can be calculated, using for example the following equation as given by M. R. Paiam and R. I. MacDonald, in " Design of phased-array wavelength division multiplexers using multimode interference couplers" , Appl. Opt., Vol. 36, no. 21, pp. 5097-5108, July 1997:

$$\varphi_{ij} = -\frac{\pi}{2}(-1)^{i+j+N} + \frac{\pi}{4N}\left[ i + j - i^2 - j^2 + (-1)^{i+j+N}\left( 2ij - i - j + \frac{1}{2}\right)\right],$$

in which $\varphi_{ij}$ is the relative phase between light launched into the input port $i$ and light emitted from the output port $j$.

(v) Using such an equation one must first choose an input port number $i$, find the phase distribution $\varphi_{ij}$ for light launched into that port, and then choose an output port number $j$, and find the phase distribution $\varphi_{ij}$ for light provided from that output port and take its negative. Finally, one subtracts each phase in the first distribution from the corresponding phase in the negated second distribution, and the result is the set of phase shifts needed to switch from the chosen input port to the chosen output port. The phase shifts will always be expressed as integer multiples of $\pi/N$

The intrinsic switch states allow crude switching of a light beam from a particular input port to a particular target output port, because approximate control solutions, derived from an idealized theory, are used. Generally, a significant amount of power is unintentionally leaked to non-targeted output ports. A major problem with the GMZI is that to achieve a perfect switch state with low leakage levels, both the performance of the MMI couplers and manufacturing tolerances are very critical.

It has now been found that, application of an arbitrary phase shift, however, to the arms of a GMZI results in a phase distribution that is not one of N distinct phase distributions entering the combining MMI. Hence, light, in general, will not emerge from a single output port of the GMZI. According to the prior art, a GMZI was used only as a switch. The present invention generalizes the operation of the GMZI to previously unknown applications, namely, the controlled distribution of light among the multiple output ports of a GMZI. However, it would be additionally advantageous to further generalize an optical switch.

As is evident from the above, the integrated optical multimode interference (MMI) coupler has been the subject of much attention and research in recent years. Additional publications provide even further insight into the MMI coupler see, for example: L. B. Soldano, *et al.* in a paper entitled " Planar Monomode Optical Couplers Based on Multimode Interference Effects," *J. Lightwave Technol.*, vol. 10, no. 12, pp. 1843-1849, 1992; M. Bachmann, *et al.* in a paper entitled " General self-imaging properties in $N \times N$ multimode interference couplers including phase relations," Appl. Opt., vol. 33, no. 18, pp. 3905-3911, 1994; and L. B. Soldano *et al.*, in a paper entitled " Optical multi-mode interference devices based on self-imaging: principles and applications," *J. Lightwave Technol.*, vol. 13, no. 4, pp. 615-627, Apr. 1995. It has been shown that MMI couplers can be used in generalized Mach-Zehnder interferometer configurations, to actively route and switch optical signals as detailed by: L. B. Soldano *et al.*, in a paper entitled " Optical multi-mode interference devices based on self-imaging: principles and applications," *J. Lightwave Technol.*, vol. 13, no. 4, pp. 615-627, Apr. 1995; and R. M. Jenkins, *et al.*, in a paper entitled " Novel 1 $\times$ N and $N \times N$ integrated optical switches using self-imaging multimode GaAs/AlGaAs waveguides," *Appl. Phys. Lett.*, vol. 64, no. 6, pp. 684-686, Feb. 1994.

Generally, the 1 $\times$ N switch is controlled by applying N sets of phase shifts to N arms. For small $N$, the phase shifts are quantized into a small number of discrete levels, and control is possible using digital logic circuitry to drive the phase shifters. As $N$ increases, however, the driving conditions of the switch become more complex. The number of discrete phase shift levels, the number of independent phase shifts, and the maximum phase shift required all increase. As a result, the operation of larger switches requires elaborate control circuitry and higher power levels. In addition to the 1 $\times$ N switch an easily controlled $N$ x $N$ switch until now remained elusive.

An $N \times N$ GMZI has a limited switching capacity. The $N \times N$ GMZI has $N$ possible switching states. In view of this, there are many desired switching states that are not accessible. Indeed, once a route has been chosen for light launched into a particular input port of the $N \times N$ GMZI to emerge from a selected output port, routes for light launched into all remaining input ports are fixed. For example, if light is switched from a first input port to a fourth output port in a $4 \times 4$ GMZI, light can only be switched from: a second input port to a second output port; a third input port to a third output port; and a fourth input port to a first output port. This demonstrates blocking switching capacity provided by an isolated $N \times N$ GMZI.

Switches have been proposed that use a plurality of Mach-Zehnder interferometers, see, for example, M. Bachmann, *et al.,* " Compact Polarization-Insensitive Multi-Leg 1 $\times$ 4 Mach-Zehnder Switch in InGaAs/InP," in Proc. *ECIO,* Firenze, Italy, pp. 519-522, 1994, in which a number of independently controlled 1 $\times$ $N$ GMZI switches are used. While this design is a strictly non-blocking optical switch, it requires $4N$ MMI couplers, $2N^2$ phase shifters, and numerous waveguide crossings, resulting in a large and complex switch with complicated control requirements. The waveguide crossings have specific geometrical tolerances that have to be met. If the specific geometrical tolerances are not met, " cross-talk" increases substantially and often increases attenuation. Control of a $4 \times 4$ switch using Bachmann's design requires 16 MMIs and 32 phase shifters. It will be appreciated by one skilled in the art that both manufacture and control of such a device is not a simple matter.

It would be advantageous to provide an apparatus that improves the control of the 1 $\times$ $N$ switch and the $N \times N$ switch.

## Object of Invention

Thus, it is an object of this invention to provide a new method of splitting an optical beam and of performing intensity control of optical beams. In addition, in an attempt to overcome limitations of known prior art devices, it is an object of this invention to provide new 1 $\times$ $N$ and $N \times N$ optical switches.

## Summary of the Invention

The present invention provides a method whereby the operation of the known prior art GMZI is extended, to include more general functionality of a GMZI as a variable-ratio power splitter. The determination of accurate attenuating states according to the present invention permits the development of new integrated attenuators. The terms " power" and " intensity" are used herein interchangeably, to describe an optical signal, and one skilled in the art will appreciate that power is simply time-dependent intensity.

According to the present invention a GMZI is used as a generalized optical power splitter, where a very wide range of possible power splitting ratios are achieved and controlled. As a special case of this far more general application, the device forms a switch, where the light emerges substantially from a single output port. This is akin to no attenuation.

The present invention is also applicable to a GMZI intentionally manufactured with waveguide arms of unequal optical path length in its passive state. That is, a GMZI with fixed phase shifts incorporated into its passive state. The present invention also provides further benefits. By launching a beam of light into a GMZI and measuring the output light distribution, the passive state of a particular GMZI can be characterized.

While the technology available now does not produce truly 'ideal' MMI couplers, with the ever-increasing precision with which devices are made, and the wide range of new materials being discovered, it is feasible that within a relatively short time frame, ideal waveguides and MMI couplers will be fabricated, and this will further increase the value of the present invention.

In accordance with this invention by splitting a beam into sub beams of predetermined intensity, it is possible to distribute a single optical beam to various output ports, with different intensities so that each sub-beam may be sent efficiently, negating the need for amplification or attenuation of the beam. Reconfiguration of a flexible optical variable-ratio power splitter as taught in accordance with this invention allows restoration of power in the event that there is a failure of an original routing link. For example, reconfiguration allows diversion of an optical signal to an unused output port in the event of failure.

In accordance with the present invention, a transfer matrix algebra approach is generalized for application to an $N \times N$ MMI coupler. A transfer matrix for the $N \times N$ MMI coupler is provided, and a total transfer matrix for the $N \times N$ GMZI is also provided. Through the use of the GMZI transfer matrix, variable-ratio $N$-way active or passive optical power splitters are designed. In a special case of variable-ratio active power splitting, the $N \times N$ GMZI is shown to operate as a 1 $\times$ $N$ switch, which provides a limited $N \times N$ cross-connect capability.

Desired variable optical signal ratios emerging from the $N$ output ports of the $N \times N$ GMZI constitute a predetermined intensity state of the variable-ratio power splitter. A predetermined intensity state is achieved from the device by first equating this predetermined intensity state, in the form of a normalized set of $N$ light intensity values, to the total transfer matrix for the $N \times N$ GMZI. This provides a system of non-linear equations, which are then solved to yield a set of optical phase shifts, which are applied to the GMZI to obtain the predetermined state. In special cases where the predetermined state corresponds to the $N \times N$ GMZI operating as a $1 \times N$ switch, the term intrinsic switch state is used.

Having knowledge of the characteristics of a manufactured GMZI facilitates optimization of conditions to obtain a desired predetermined intensity state. The present invention provides an advantage over optimizing a GMZI by a substantial amount of optical path length perturbations and computational iterations. That said, optimization of a GMZI in any fashion for use in other than an intrinsic switching state is believed new.

The present invention extends the utility of a GMZI, to provide a variable-ratio optical power splitter. In this device, at least two non-zero light intensity values are selected for light emerging from the output ports of the GMZI, that is to say: selecting a predetermined intensity state other than an intrinsic switch state.

In accordance with the invention there is provided a variable-ratio optical power splitter comprising: a splitting region for splitting light into $N$ sub-beams, the splitting region having P input ports, each input port for receiving light; a combining region having $N$ output ports, the combining region for receiving the $N$ sub-beams, for combining the $N$ sub-beams to produce combined sub-beams, and for providing the combined sub-beams to at least one of the $N$ output ports; $N$ waveguide arms coupling the splitting region to the combining region each for guiding a sub-beam from the $N$ sub-beams from the splitting region to the combining region, where $N$ is greater than 2; and a controller for changing an optical path length of at least one of the $N$ waveguide arms, such that a predetermined intensity state other than an intrinsic switching state emerges from the $N$ output ports.

In an embodiment of the present invention the splitting region comprises a first $N$ x $N$ multimode interference coupler having $N$ input ports and $N$ output waveguides, the combining region comprises a second $N$ x $N$ multimode interference coupler having $N$ input waveguides and $N$ output ports, and the $N$ waveguide arms comprises $N$ output waveguides of the first $N$ x $N$ multimode interference coupler optically coupled to $N$ input waveguides of the second $N$ x $N$ multimode interference coupler thereby forming an integrated optical $N$ x $N$ Mach-Zehnder interferometer.

In another embodiment of the present invention the predetermined intensity state is selected from at least $N$ + 1 predetermined intensity states. In another embodiment of the controller comprises a suitably programmed processor. In another embodiment of the present invention the predetermined intensity state is selected from a look-up table stored and accessed electronically.

In another embodiment of the present invention the integrated optical $N$ x $N$ Mach-Zehnder interferometer is characterized by a system of $N$ non-linear equations, the controller comprising: a processor for determining values relating to a change in optical path length of the waveguide arms by solving the system of $N$ non-linear equations based upon predetermined intensity ratios, wherein the controller for changing an optical path length is responsive to the determined values.

In another embodiment of the present invention the variable-ratio optical splitter is characterized by a system of $N$ non-linear equations in the form of a matrix algebra model, the variable-ratio optical splitter comprising: a processor for determining values relating to a change in optical path length of the waveguide arms by solving the matrix algebra model based upon predetermined intensity ratios, wherein the controller for changing an optical path length is responsive to the determined values.

In another embodiment of the present invention, the $N$ non-linear equations comprise the equation:

$$t_{ik} = \frac{1}{N}\sum_{j=1}^{N} e^{j(\varphi_{ij}+\Delta\varphi_j+\varphi_{jk})} \text{ , where } I_k^{out} = |t_{ki}|^2 I_0 .$$

In another embodiment of the present invention the variable-ratio optical splitter comprises a monitor for monitoring intensity of a sub-beam emerging from an output port from the $N$ output ports and for providing feedback, wherein the controller is for changing the optical path length of at least one waveguide arm in dependence upon the feedback, the change for maintaining an intensity of the monitored sub-beam within predetermined limits.

The present invention further provides a method of dividing a beam of light into $N$ sub-beams, each sub-beam having a predetermined intensity within predetermined limits, the method comprising the steps of: (i) launching the beam of light into an input waveguide of an integrated optical Mach-Zehnder interferometer, the integrated optical Mach-Zehnder interferometer comprising a first $P$ x $N$ multimode interference coupler having $P$ input ports and $N$ output waveguides, and a second $N$ x $N$ multimode interference coupler having $N$ input waveguides and $N$ output ports, wherein the $N$ output waveguides of the first $P$ x $N$ multimode interference coupler are optically coupled with the $N$ input waveguides of the second $N$ x $N$ multimode interference coupler thereby forming $N$ waveguide arms, $N$ is greater than 2, and $P$ is less than or equal to $N$; and (ii) selecting a predetermined intensity state other than an intrinsic switching state and changing an optical path length of each of a plurality of the $N$ waveguide arms, such that the predetermined intensity state emerges from the $N$ output ports.

In an embodiment of the present invention, the predetermined intensity state is selected from at least $N + 1$ predetermined intensity states. In another embodiment, a change in the optical path length of each of the plurality of the $N$ waveguide arms for the predetermined intensity state is selected from a look-up table.

In another embodiment, the integrated optical Mach-Zehnder interferometer is characterized by a system of $N$ non-linear equations, and the change in the optical path length of each of the plurality of the $N$ waveguide arms is determined by solving the system of $N$ non-linear equations based upon predetermined intensity ratios using a processor.

In another embodiment, the change in optical path length of each of the plurality of the $N$ waveguide arms is determined by solving a matrix algebra model of the system of $N$ non-linear equations based upon predetermined intensity ratios.

In another embodiment, the change in optical path length of each of the plurality of the $N$ waveguide arms is determined by solving a matrix algebra model of the equation:

$$t_{ik} = \frac{1}{N} \sum_{j=1}^{N} e^{j(\varphi_{ij} + \Delta\varphi_j + \varphi_{ij})} \text{, where } I_k^{out} = |t_{ki}|^2 I_0.$$

In another embodiment, the beam of light is the only beam of light launched into any of the $P$ input ports of the integrated optical Mach-Zehnder interferometer at an instant in time.

In another embodiment, the method of dividing a beam of light into $N$ sub-beams comprises monitoring intensity of light emerging from an output port from the $N$ output ports and changing the optical path length of some of the plurality of the $N$ waveguide arms in dependence upon the monitored intensity to maintain the intensity of the monitored sub-beam within predetermined limits.

The variable-ratio optical splitter is a device for dividing a beam of light into $N$ sub-beams, each sub-beam having a predetermined intensity within predetermined limits and naturally the present invention extends to a method.

The present invention provides a method of characterizing an integrated optical Mach-Zehnder interferometer for dividing a beam of light into $N$ sub-beams comprising the steps of: (i) launching a beam of light into an input waveguide of the integrated optical Mach-Zehnder interferometer, the integrated optical Mach-Zehnder interferometer comprising a first $P \times N$ multimode interference coupler having $P$ input ports and $N$ output waveguides, and a second $N \times N$ multimode interference coupler having $N$ input waveguides and $N$ output ports, wherein the $N$ output waveguides of the first $P \times N$ multimode interference coupler are optically coupled with the $N$ input waveguides of the second $N \times N$ multimode interference coupler thereby forming $N$ waveguide arms, $N$ is greater than 2, and $P$ is less than or equal to $N$; (ii) measuring light distribution from the $N$ output ports of the second $N \times N$ multimode interference coupler; and (iii) providing the measured light distribution to a suitably programmed processor for processing the measured light distribution to determine relative optical path length differences between the $N$ waveguide arms of the integrated optical Mach-Zehnder interferometer.

In an embodiment, the method of characterizing an integrated optical Mach-Zehnder interferometer for dividing a beam of light into $N$ sub-beams, in which the step (iii) comprises the step of: using the suitably programmed processor, solving a system of $N$ non-linear equations to determine calibration values, the calibration values for compensating for relative optical path length differences in the $N$ arms.

In another embodiment, the system of $N$ non-linear equations is solved using a matrix algebra model. In a further embodiment, the differences in optical path length are determined by solving a matrix algebra model of the equation:

$$t_{ik} = \frac{1}{N} \sum_{j=1}^{N} e^{j(\varphi_{ij} + \Delta\varphi_j + \varphi_{jk})} \text{, where } I_k^{out} = |t_{ki}|^2 I_0.$$

One skilled in the art will appreciate that a means for processing predetermined intensity values of sub beams and converting these values into required phase shifts is achievable through a combination of software and hardware. It is a matter of routine programming to generate software using the following theory and to construct a computer program for processing input data and deriving phase shifts to be applied. It is also a matter of routine skill in the art to link data input into the program and, for example, provide an output signal of a voltage value to be applied automatically to one or more phase shifters to achieve a predetermined intensity state.

It is also a matter of routine to tap light at an output port of the GMZI and provide a monitoring and feedback mechanism, whereby the output state of the device is intermittently or continuously monitored and the active control conditions are modified to steer or maintain the output state.

A new generation of optical switches is also provided. The optical switches provide many switch states. A switch state is a specific series of routing connections formed by routing light from one set of ports to another set of ports in a particular optical switch.

The terms input port and output port are used primarily to define structure. Non-blocking optical switches commonly function in reverse and those described herein are no exception. The terms output port and input port do not signify any restriction in direction of light flow in the optical switches of the present invention. For any singular switch state, if a beam of light is launched into an input port to emerge from a particular output port, a beam of light when launched into the output port will emerge from the input port. The optical switches defined in this document function in both routing directions. However, a particular direction of flow may be preferred for some switching applications. Obviously, the devices disclosed are able to be made uni-directional such that they operate in one or the other direction of flow by incorporation of other components. As used herein, each of the terms " first ports" and " second ports" refers to either input ports or output ports or input/output ports.

As used herein, the expression "non-blocking optical switch" refers to a "wide sense non-blocking optical switch" which describes a device with input ports and output ports. A signal from any input port is routed to any unoccupied output port. A new path is provided from any input port to any output port; however, to provide the new path, existing connections of the optical switch are disrupted. A "wide sense non-blocking optical switch" is distinct from a "strictly non-blocking optical switch". A "strictly non-blocking optical switch" describes a device with input ports and output ports. In a "strictly non-blocking optical switch" a signal from any input port is capable of being routed to any unoccupied output port, and the new path is capable of being provided from any input port to any output port without disrupting existing connections other than those necessary to make the change.

The present invention provides an optical switch comprising: an integrated optical $N \times N$ Mach-Zehnder interferometer, $N$ being greater than 2, the integrated optical Mach-Zehnder interferometer comprising a first $N \times N$ multimode interference coupler having $N$ first ports and $N$ second waveguides, and a second $N \times N$ multimode interference coupler having $N$ first waveguides and $N$ second ports, wherein $N$ second waveguides of the first $N \times N$ multimode interference coupler are optically coupled with $N$ first waveguides of the second $N \times N$ multimode interference coupler thereby forming $N$ waveguide arms; optical path length changers for changing an optical path length of at least 2 of the $N$ waveguide arms; and a $P \times P$ optical switch having $P$ second ports and $P$ first ports, $P$ being at least 2 and less than $N$, at least 2 of the $P$ second ports optically coupled to at least 2 of the $N$ first ports.

In an embodiment of the optical switch, $N$ is greater than 3 and comprising a $U \times U$ optical switch having $U$ second ports and $U$ first ports, $U$ being at least 2 and less than $N$, at least 2 of the $U$ second ports optically coupled to at least 2 of the $N$ first ports.

In an embodiment, the optical switch comprises a $T \times T$ optical switch having $T$ second ports and $T$ first ports, $T$ being at least 2 and less than $N$, and at least 2 of the $T$ first ports being optically coupled to at least 2 of the $N$ second ports. In an embodiment the optical switch further comprises a $Z \times Z$ optical switch having $Z$ second ports and $Z$ first ports, $Z$ being at least 2 and less than $N$, at least 2 of the $Z$ first ports optically coupled to at least 2 of the $N$ second ports. In an embodiment the optical switch still further comprises an attenuator for reducing light intensity of a beam of light routed through $Z$ of $N$ second ports, $Z$ being at least 2, for providing substantially same attenuation as provided by the $T \times T$ optical switch, and optical path length changers for changing the optical path length of each of the $N$ waveguide arms.

In preferred embodiments: $P + U = N$; $P + U = N = Z + T$; $P + U = N = Z + T$; and $N$ is selected from 4, 6, 8, 10 and 12.

In an embodiment, the $P \times P$ optical switch is a non-blocking optical switch, the $U \times U$ optical is a non-blocking optical switch, and the $T \times T$ optical switch is a non-blocking optical switch.

In an embodiment, the optical path length changers comprise $(N - 1)$ individual optical path length changers, each for changing the optical path length of a waveguide arm.

In another embodiment, the optical switch comprises a $T \times T$ optical switch having $T$ second ports and $T$ first ports, $T$ being at least 2 and less than $N$, and at least 2 of the $T$ first ports being optically coupled to at least 2 of the $N$ second ports.

In another embodiment, the optical switch comprises a controller for monitoring intensity of a beam of light emerging from a port of the optical switch and for providing a signal to the optical path length changers, wherein the optical path length changers are for changing the optical path length of at least one waveguide arm of the $N$ waveguide arms for maintaining a switch state in dependence upon the signal.

In another embodiment, the $P \times P$ optical switch comprises an $(N - 1) \times (N - 1)$ non-blocking optical switch having $(N - 1)$ first ports and $(N - 1)$ second ports, the $(N - 1)$ second ports of the $(N - 1) \times (N - 1)$ non-blocking optical switch optically coupled to $(N - 1)$ of the $N$ first ports of the integrated optical $N \times N$ generalized Mach-Zehnder interferometer.

In another embodiment, the $(N - 1) \times (N - 1)$ non-blocking optical switch comprises $N - 2$ GMZIs each having a different number of waveguide arms, the number of waveguide arms from 2 to $N - 1$, the $N - 2$ GMZI's arranged in descending order of number of waveguide arms, such that each GMZI other than a terminal GMZI with 2 waveguide arms and an initial GMZI with $N$ - 1 waveguide arms is disposed between two GMZI's, one with one more waveguide arm and one with one less waveguide arm, each GMZI having a single free second port and each port other than the free second port within a GMZI optically coupled to one and only one port of an adjacent GMZI.

In another embodiment, the optical switch comprises an attenuator for reducing light intensity of light emerging from at least one of the free ports.

In another embodiment, the optical switch comprises an attenuator for reducing light intensity of light emerging from a port of the integrated optical $N \times N$ generalized Mach-Zehnder interferometer other than a port optically coupled to the $(N$ - 1$) \times (N$ - 1$)$ non-blocking optical switch.

In an embodiment, the optical switch comprises $(N$ - 1$)$ GMZIs optically coupled in a series, input ports of a GMZI in the series coupled to output ports of another GMZI, the integrated optical $N \times N$ GMZI being one of the $(N$ - 1$)$ GMZIs, and the $P \times P$ optical switch being one of the $(N$ - 1$)$ GMZIs, the GMZIs in the series each having a different number of waveguide arms, the number of waveguide arms from 2 to $N$.

In an embodiment, the optical switch the series of GMZIs is ordered to provide a non-blocking optical switch.

The present invention also provides an optical switch comprising: a splitting region for splitting input light into $N$ sub-beams, the splitting region having $N$ first ports; a combining region having $N$ second ports, the combining region for combining the $N$ sub-beams and for providing the combined sub-beams to at least one of the $N$ second ports; $N$ waveguide arms coupling the splitting region to the combining region for providing the $N$ sub-beams from the splitting region to the combining region, where $N$ is even and greater than 3; optical path length changers for changing an optical path length of at least $(N$ - 1$)$ of the $N$ waveguide arms; a $P \times P$ non-blocking optical switch having $P$ second ports and $P$ first ports, $P$ is at least 2 and less than $N$, and at least 2 of the $P$ second ports optically coupled to at least 2 of the $N$ first ports; a $U \times U$ non-blocking optical switch having $U$ second ports and $U$ first ports, $U$ being $N$ - $P$, at least 2 of the $U$ second ports optically coupled to at least 2 of the $N$ first; a $T \times T$ non-blocking optical switch having $T$ second ports and $T$ first ports, $T$ is at least 2 and less than $N$, and at least 2 of the $T$ first ports being optically coupled to at least 2 of the $N$ second ports; and a controller for monitoring intensity of a beam of light emerging from a port of the optical switch and for providing a signal to the optical path length changers, wherein the optical path length changers are for changing the optical path length of at least one waveguide arm of the internal waveguide arms in dependence upon the signal, the change for maintaining a switch state.

The present invention also extends to a method of extending an $(N$ - 1$) \times (N$ -1$)$ non-blocking optical switch which comprises a step of optically coupling $N$ - 1 second ports of an integrated optical $N \times N$ Mach-Zehnder interferometer to $N$ - 1 first ports of the $(N$ - 1$) \times (N$ - 1$)$ non-blocking optical switch.

In another embodiment, the method of extending an $(N$ - 1$) \times (N$ - 1$)$ non-blocking optical switch comprises a step of attenuating light emerging from at least one port of the $N \times N$ Mach-Zehnder interferometer other than light emerging from a port coupled to the $(N$ - 1$) \times (N$ - 1$)$ non-blocking optical switch.

In another embodiment, the method of extending an $(N$ - 1$) \times (N$ - 1$)$ non-blocking optical switch comprises a step of providing a controller for monitoring intensity of a beam of light emerging from the optical switch and for providing a signal to the controller, wherein the controller is for changing the optical path length of at least one waveguide arm of the integrated optical $N \times N$ Mach-Zehnder interferometer in dependence upon the signal, the change for maintaining a switch state,

In another embodiment, the method of extending an $(N$ - 1$) \times (N$ - 1$)$ non-blocking optical switch comprises a step of providing a controller for monitoring intensity of a beam of light emerging from the optical switch and for providing a signal to the controller, wherein the controller is for changing an optical path length of at least one waveguide arm of the $(N$ - 1$) \times (N$ - 1$)$ non-blocking optical switch in dependence upon the signal, the change for maintaining a switch state.

In accordance with the invention there is additionally provided an optical switch for routing a beam of light from a first input port to a selected output port, the optical switch comprising: a $Z \times T$ optical switch having $Z$ input ports including the first input port and $T$ output ports; an integrated optical Mach-Zehnder interferometer comprising a first $N \times N$ multimode interference coupler having $N$ input ports and $N$ output waveguides, at least two of the $N$ input ports coupled to at least two of the $T$ output ports of the $Z \times T$ optical switch, and a second $N \times N$ multimode interference coupler having $N$ output ports including the selected output port and $N$ input waveguides, wherein $N$ output waveguides of the first $N \times N$ multimode interference coupler are optically coupled with $N$ input waveguides of the second $N \times N$ multimode interference coupler thereby forming $N$ waveguide arms; and a optical path length changer for changing a optical path length of at least one of the $N$ waveguide arms, wherein $N$ is an even value greater than 3, and $T$ is at least 2, such that the beam of light is launched into the first input port and emerges substantially from the selected output port.

In an embodiment, at least one of the T output ports is coupled to an input port of the N input ports selected from input ports of the group $K_1$ and another of the T output ports is coupled to an input port of the N input ports selected from the group $K_2$. In another embodiment, the group $K_1$ consists of input ports from the N input ports that, when numbered sequentially along an open path from 1 to N, have port numbers that when divided by 4 have a remainder from the group of 1 and 4 and, wherein the group $K_2$ consists of input ports from the N input ports that, when numbered sequentially along an open path from 1 to N, have port numbers that when divided by 4 have a remainder from the group of 2 and 3.

In an embodiment, the optical path length changer comprises a thermal source for heating a waveguide arm. In another embodiment, substantially a same amount of electrical power is applied to the thermal source to heat both waveguide arms within a pair of waveguide arms.

In an embodiment, the N waveguide arms are disposed along an open path and grouped as pairs of waveguide arms, two substantially central waveguide arms forming a first pair of waveguide arms, and each subsequent pair of waveguide arms formed by two waveguide arms, one on each side of the already grouped waveguide arms, and wherein the optical path length changer is for changing path lengths of two individual waveguide arms that form a pair substantially simultaneously such that both optical path lengths of the pair are changed by substantially a same amount.

In an embodiment, the optical path length changer comprises a controller for providing a control signal and an actuator for receiving the control signal and for changing optical path lengths of pairs of waveguide arms from the pairs of waveguide arms in response to the control signal.

The present invention also provides an optical switch for routing a beam of light from an input port to a selected output port, the optical switch comprising: a first $Z$ x $T$ optical switch having $Z$ input ports, including the first input port, and $T$ output ports; an integrated optical $P$ x $U$ GMZI comprising a splitting region having $P$ input ports at least two of the $P$ input ports coupled to at least two of the $T$ output ports, a combining region having $U$ output ports, including the selected output port, and $N$ waveguide arms coupling the splitting region to the combining region, the $N$ waveguide arms disposed along an open path and grouped as pairs of arms, two substantially central waveguide arms forming a first pair, and each subsequent pair formed by two waveguide arms, one on each side of the already grouped waveguide arms; and a controller for providing a control signal and an actuator for receiving the control signal and for substantially simultaneously changing optical path lengths of two individual waveguide arms that form a pair by substantially a same amount in response to the control signal, wherein $N$ is an even value greater than 3, $U$ is at least 3, $T$ and $P$ are at least 2, and $P$ is less than or equal to $N$.

In preferred embodiments of the invention: $Z$ = 1; $Z$ = 1 and $T$ = 2; $P$ = $U$ = $N$; and $P$ = 2. In another preferred embodiment of the invention $N$ = $U$ and $P$ = 2.

In an embodiment, the first $Z$ x $T$ optical switch comprises an integrated 1 x 2 optical switch. In another embodiment, the integrated 1 x 2 optical switch comprises a 1 x 2 Mach-Zehnder Interferometer.

The present invention also extends to a method of upgrading an integrated $N$ x $N$ optical Mach-Zehnder interferometer, $N$ being an even value greater than 3, to form an optical switch for routing a beam of light from an input port to a selected output port which comprises the steps of: providing a 1 x 2 optical switch; and, optically coupling two input ports of the integrated $N$ x $N$ optical Mach-Zehnder interferometer to two output ports of the 1 x 2 optical switch.

In many instances, monitoring of a beam of light emerging from the optical switch is required. A small fraction, or tap, of optical power distributed to a specified port is used to monitor ad ensure a specified intensity or integrity, i.e., switch state. Under some circumstances a GMZI may drift- the specified intensity or integrity may change under a specific operational condition. The integrity of a beam of light may be compromised by contamination from other light beams giving rise to " cross-talk". If " cross-talk" becomes unacceptable a particular switch state may be reset to reduce " cross-talk". A controller is used for monitoring intensity of the beam of light emerging from the optical switch and for providing a feedback signal to the phase shifters. This feedback signal is for changing the optical path length of at least one waveguide arm of the optical switch, the change for maintaining a particular switch state.

**Brief Description of the Drawings**

Exemplary embodiments of the invention will now be described in conjunction with the following drawings, in which:

Figure 1 is a schematic illustration of a general $N \times N$ MMI coupler. The same corresponding numbering direction has been used for both input ports and output ports.

Figure 2 is a schematic illustration of a general layout of an $N \times N$ generalized Mach-Zehnder interferometer. Identical $N \times N$ MMI couplers are used as splitter and combiner. Waveguide arms $j$ are of the same length and have active phase shifting regions indicated by the shaded areas.

Figure 3 is a schematic illustration of a general layout of the $N \times N$ cascaded non-blocking optical switch. The optical switch is composed of smaller GMZIs, arranged in descending order.

Figure 4 is a schematic illustration of a 4 × 4 balanced non-blocking optical switch. The shaded regions indicate phase shifters. Three active 2 × 2 GMZIs allow $4*2^3 = 32$ output permutations to be achieved, with redundancy. Location of a passive 2 × 2 GMZI is chosen arbitrarily.

Figure 5 is a schematic illustration of an 8 × 8 balanced non-blocking optical switch. A horizontal line bisecting the 8 × 8 GMZI is used to ensure that every possible number of crossovers from one side of this line to the other in the 8 × 8 GMZI is achieved within the eight available GMZI states. Once this line is drawn, smaller non-blocking optical switches are used to connect ports on both sides of the line.

Figure 6 is a schematic illustration of a passive $N × N$ GMZI for $N = 2K$, with $K$ even. The GMZI consists of two superimposed $K × K$ MMI couplers, distinguished by shading, that possess input and output ports from the same port set.

Figure 7 is a schematic illustration of a representation of the passive $N × N$ GMZI for $N = 2K$, with $K$ odd. The GMZI consists of two superimposed $K × K$ MMI couplers, that possess input and output ports from different port sets.

Figure 8 is a schematic illustration of an improved 1 × $N$ switch design. The case where $K$ is odd is shown. Ports with similar shading belong to the same $K × K$ coupler. By switching a single input between GMZI inputs which correspond to different $K × K$ couplers, a single input is routed to any output port using an efficient set of phase shifts.

Figure 9 is a schematic illustration of operation of the improved 1 × 4 switch. The two symmetry conditions on the phase shifts result in the control of the 4 × 4 GMZI by a single binary bit Y. An additional bit X is required to control the 1 × 2 switch. Routing to any output is possible by applying a two-bit binary control word XY to the device.

In the following detailed description of the invention, the same numbering is used in different figures to designate similar components.

## Detailed Description of the Preferred Embodiments of the Invention

### Theoretical Basis

### Transfer Matrix of the $N × N$ MMI Coupler

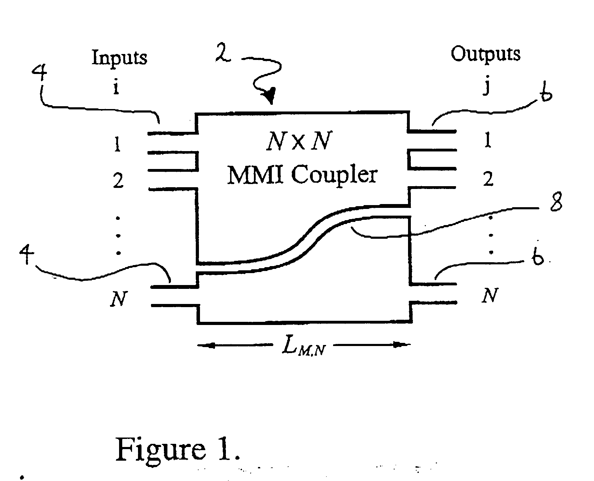

Referring to Fig. 1, the MMI coupler **2** is illustrated as a substantially rectangular body, one side of the rectangular body having input ports **4** and the opposing side having output ports **6**. The body of the MMI coupler is illustrated as having a break line **8**. The break line **8** is used to indicate that the number $N$ of corresponding input ports **4** and output ports **6** varies according to design requirements. Also, the number of input ports **4** may differ from the number of output ports **6** according to design requirements. The coupler length is given by Bachmann, *et al.* in " Overlapping-image multimode interference couplers with a reduced number of self-images for uniform and non-uniform power splitting", *Appl. Opt.*, vol. 34, no. 30, pp. 6898-6910, Oct. 1995.

$$L_{M,N} = \frac{M}{N} 3 L_{\pi} , \tag{1}$$

where $L_{\pi}$ is the beat length of the coupler, and $M$ and $N$ are any two positive integers without a common divisor. The shortest device length is obtained when $M = 1$. The beat length $L_{\pi}$ is defined as found in a paper by E. C. M. Pennings, *et al.*, in " Ultracompact, low-loss directional couplers on InP based on self-imaging by multimode interference", *Appl. Phys. Lett.,* vol. 59, pp. 1926-1928, 1991,

$$L_{\pi} = \frac{\pi}{\beta_0 - \beta_1} , \tag{2}$$

where $\beta_0$ and $\beta_1$ are the propagation constants of the fundamental and first order modes supported by the multimode region, respectively.

The phase associated with imaging a beam of light from input port $i$ to an output port $j$ in an MMI coupler was first derived by Bachmann *et al.* in "General self-imaging properties in $N \times N$ multimode interference couplers including phase relations", *Appl. Opt.*, vol. 33, no. 18, pp. 3905-3911, June 1994, and contains two contributions: an absolute phase term, and a relative phase term. In the present analysis, it is the relative phases of tight at the coupler output ports that are important, so it is possible to drop the absolute term without loss of generality. Furthermore, the relative phase relations are recast into a simpler form see M. R. Paiam and R. I. MacDonald, both applicants, in "Design of phased-array wavelength division multiplexers using multimode interference couplers", *Appl. Opt.*, Vol. 36, no. 21, pp. 5097-5108, July 1997, yielding the relative phases $\varphi_{ij}$:

$$\varphi_{ij} = -\frac{\pi}{2}(-1)^{i+j+N} + \frac{\pi}{4N}\left[i+j-i^2-j^2+(-1)^{i+j+N}\left(2ij-i-j+\frac{1}{2}\right)\right], \tag{3}$$

where the first subscript indicates a number of an input port **4** and the second subscript indicates a number of an output port **6**. A symmetry relation $\varphi_{ij} = \varphi_{ji}$ is found from equation (3), by interchanging $i$ and $j$. Note that the $\varphi_{ij}$ are not unique for a given $N$, since it is possible to add integer multiples of $2\pi$ to any of them, and the entire set of $\varphi_{ij}$ is shifted globally by any amount.

The $\varphi_{ij}$ form a matrix $\Phi$, with $i$ representing the row number, and $j$ representing the column number. By the symmetry relation, $\Phi$ is a symmetric matrix:

$$\Phi = \Phi^T, \tag{4}$$

where the superscript $T$ indicates the transpose operation.

The transfer matrix for the MMI coupler is directly related to $\Phi$, and is given by:

$$S_{coupler} = \left(\frac{1}{N}\right)^{\frac{M}{2}}(e^{j\Phi})^M, \tag{5}$$

where $j=\sqrt{-1}$. The symbol $j$ in equation (5) should not be confused with the arm index $j$. Since $\Phi$ is symmetric, it follows that the transfer matrix is symmetric and unitary, for elaboration see G. Arfken in "Mathematical Methods for Physicists", 3rd Edition. San Diego: Academic Press, 1985, ch. 4, i.e.,

$$S = S^T \text{ and } S^\dagger S = S S^\dagger = I, \tag{6}$$

where $\dagger$ denotes the adjoint operation and $I$ is the identity matrix of order $N$. The conditions in equation (6) are general properties of a transfer matrix $S$.

The matrix $S_{coupler}$ is a transfer matrix for the coupler, i.e.,

$$\begin{bmatrix} E_1^{out} \\ E_2^{out} \\ \vdots \\ E_N^{out} \end{bmatrix} = S_{coupler} \begin{bmatrix} E_1^{in} \\ E_2^{in} \\ \vdots \\ E_N^{in} \end{bmatrix}, \tag{7}$$

where $E_i^{in}$ is the complex optical field amplitude at input port $i$ and $E_j^{out}$ is the optical field at output **6** port $j$.

### The $N \times N$ Generalized Mach-Zehnder Interferometer

Basic Structure and Operation of the $N \times N$ GMZI

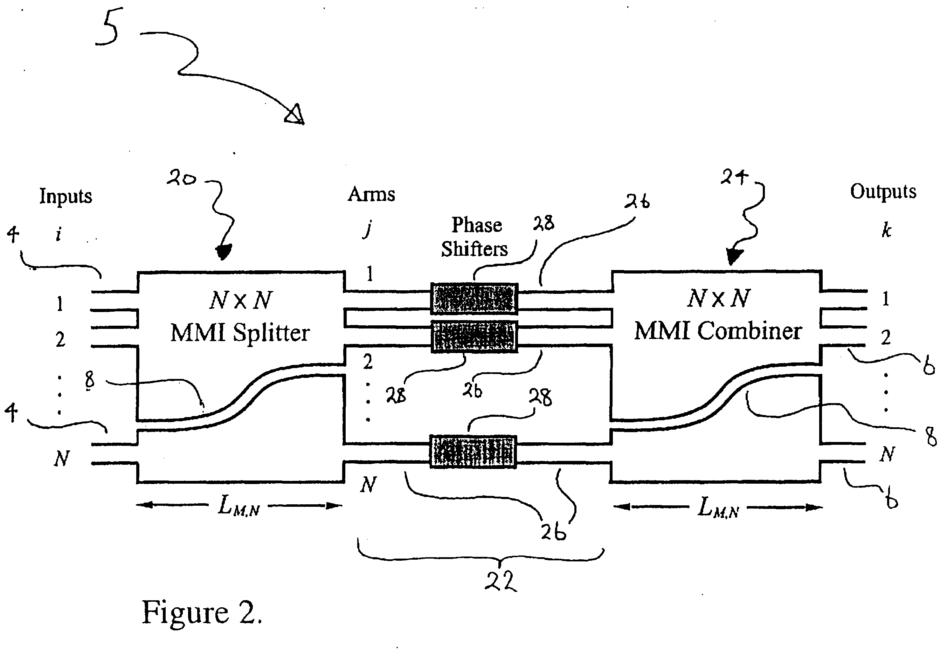

Referring to Fig. 2, the basic layout of the $N \times N$ GMZI **5** consists of three components: an $N \times N$ MMI splitter **20**; an active phase shifting region **22** having $N$ optical path length changers in the form of phase shifters **28** in the active phase shifting region **22**; and an $N \times N$ MMI combiner **24**. In the $N \times N$ GMZI, output ports of the $N \times N$ MMI splitter **20** and input ports of the $N \times N$ MMI combiner **24** form waveguides arms **26** between the $N \times N$ MMI splitter **20**

and the $N \times N$ MMI combiner **24**. In an embodiment , the waveguide arms are same waveguide arms absent any coupling therebetween. Phase shifters **28** are shown intimate with the waveguide arms **26**. An individual phase shifter **28** is shown associated with a single waveguide arm. The phase shifters **28** when not active or are not present provide a passive device. An active phase shifter **28** changes an optical path length of its associated waveguide arm **26**. An individual phase shifter **28** is operated by applying a driving signal in the form of a voltage or current, for example, to shift the phase of the light in one of the waveguide arms **26**.

In a similar manner to Figure 1, a break line **8** is used to indicate that the number $N$ of corresponding input ports **4** and output ports **6** varies according to design requirements. The $N$ waveguide arms **26** are shown numbered sequentially from top to bottom, 1 to $N$. According to an embodiment described herein, the waveguide arms **26** are disposed along a straight path from the waveguide arm designated 1 to the waveguide arm designated $N$.

Phase shifting is well known. For example, changing the optical path length of the light medium can perturb the phase of a beam of light passing through the medium. Changing the refractive index of a medium or the length of the medium in which the beam of light is guided changes the optical path length of the medium. Many phase shifting effects may be exploited in design of GMZIs, for example, temperature, electro-optic effects, opto-optic effects, stress within a medium, and magnetic effects; information pertaining to phase shifting effects is presented in Nishihara, *et al.* in " Optical Integrated Circuits". New York: McGraw-Hill, 1989, ch. 5. Commonly, a chromium heater electrode deposited on top of a waveguide arm **26** is used to heat the waveguide arm **26** thereby providing a thermally induced phase shift. An optical field at any of the input ports **4** of the MMI splitter **20** is reproduced at all output ports of the splitter, resulting in an equal distribution of light power to all waveguide arms **26** of the active phase shifting region **22**. These distributions of the light have equal intensity, but different phase. The function of the active phase shifters **28** is to modify the relative phases of light within these distributions such that a specific distribution of light having relative phases therebetween is obtained at the input ports to the MMI combiner **24**.The MMI combiner **24** performs the function of combining light from $N$ input ports of the combiner to form combined light signals at the output ports **6**. The positions and intensities of the combined light depend upon the relative phases of light signals at the input ports of the MMI combiner **24**. Since the phase shifters **28** control the relative phases of light signals at input ports of the MMI combiner **24**, control of the positions and intensities is performed by activating the phase shifters **28** to achieve the required phase distribution at the combiner input ports.

## The GMZI Transfer Matrix

Transfer matrices for the MMI couplers are given by equation (5). An MMI splitter is represented by the matrix $S_{splitter}$ with elements $s_{ij}$ and an MMI combiner is represented by the matrix $S_{combiner}$ with elements $s_{jk}$. The phase shifters act independently and produce relative shifts of each phase $\varphi_{ij}$ of light propagating through a given waveguide arm $j$ by an amount $\Delta\varphi_j$. The action of the phase shifters is described by a diagonal $N \times N$ transfer matrix, see for example, C. G. Montgomery, R. H. Dicke, and E. M. Purcell, eds., " Principles of Microwave Circuits", 1st Edition. New York: McGraw-Hill, 1948, pp. 146-151, 299-303,

$$S_{shift} = \begin{bmatrix} e^{j\Delta\varphi_1} & 0 & 0 & 0 \\ 0 & e^{j\Delta\varphi_2} & 0 & 0 \\ 0 & 0 & \ddots & 0 \\ 0 & 0 & 0 & e^{j\Delta\varphi_N} \end{bmatrix} . \tag{8}$$

The optical fields at the output ports of the GMZI are then given by

$$\begin{bmatrix} E_1^{out} \\ E_2^{out} \\ \vdots \\ E_N^{out} \end{bmatrix} = T \begin{bmatrix} E_1^{in} \\ E_2^{in} \\ \vdots \\ E_N^{in} \end{bmatrix} \tag{9}$$

where $T$ is the transfer matrix of the GMZI, given by

$$T = S_{combiner} \cdot S_{shift} \cdot S_{splitter}. \tag{10}$$

The GMZI transfer matrix is used to derive two important results. First, expanding equation (10) provides analytic expressions for the output intensities of tight in terms of the input light intensities and applied phase shifts. Secondly, the transfer matrix is used in equation (9) to solve for the phase shifts $\Delta\varphi_j$ required to achieve a given distribution of the output intensity ratios.

**Analysis Expressions for Output Intensities**

Elements of the transfer matrix $T$, denoted by $t_{ik}$, are provided by substituting equation (5) and equation (8) into equation (10):

$$t_{ik} = \frac{1}{N}\sum_{j=1}^{N} e^{j(\varphi_{ij}+\Delta\varphi_j+\varphi_{jk})}, \tag{11}$$

where $M = 1$ has been used in equation (5). Note the symmetry relation $t_{ik} = t_{ki}$. With a single input beam of optical intensity $I_0$ launched into port $i$, the intensity of light emerging from an output port $k$ is given by

$$I_k^{out} = |t_{ki}|^2 I_0. \tag{12}$$

Substituting equation (11) into equation (12) and expanding the complex exponential term yields

$$I_k^{out} = \frac{I_0}{N^2}\left\{ \left[\sum_{j=1}^{N}\cos(\varphi_{ij} + \Delta\varphi_j + \varphi_{jk})\right]^2 + \left[\sum_{j=1}^{N}\sin(\varphi_{ij} + \Delta\varphi_j + \varphi_{jk})\right]^2 \right\}. \tag{13}$$

Expanding the squared terms and simplifying the resulting expression yields

$$I_k^{out} = \frac{I_0}{N^2}\left\{ N + 2\left[\sum_{p=1}^{N-1}\sum_{q=p+1}^{N}\cos[(\varphi_{ip} - \varphi_{iq}) + (\Delta\varphi_p - \Delta\varphi_q) + (\varphi_{pk} - \varphi_{qk})]\right] \right\}, \tag{14}$$

where $p$ and $q$ refer to the internal arms $j$. Analytic expressions for the intensities at the various outputs in terms of the applied phase shifts $\Delta\varphi_j$ are derived from equation (14). To illustrate this result, the analytic expressions explicitiy for two specific cases are developed.

First consider a $2 \times 2$ GMZI. Substituting $N = 2$ into equation (14) yields

$$I_1^{out} = \frac{I_0}{4}\{2 + 2\cos[(\varphi_{11} - \varphi_{12}) + (\Delta\varphi_1 - \Delta\varphi_2) + (\varphi_{11} - \varphi_{21})]\} \tag{15}$$

$$I_2^{out} = \frac{I_0}{4}\{2 + 2\cos[(\varphi_{11} - \varphi_{12}) + (\Delta\varphi_1 - \Delta\varphi_2) + (\varphi_{12} - \varphi_{22})]\} \tag{16}$$

where input port $i = 1$ has beenchosen arbitrarily. The relative phase matrix is given by equation (3)

$$\Phi = \begin{bmatrix} 0 & \frac{\pi}{2} \\ \frac{\pi}{2} & 0 \end{bmatrix}, \tag{17}$$

where a global shift of $7\pi/16$ has been used for convenience. Substituting the elements in equation (17) into equation (15) and equation (16) yields

$$I_1^{out} = I_0 \sin^2\!\left(\frac{\Delta\varphi_1 - \Delta\varphi_2}{2}\right) \tag{18}$$

and

$$I_2^{out} = I_0 \cos^2\!\left(\frac{\Delta\varphi_1 - \Delta\varphi_2}{2}\right). \tag{19}$$

The intensity expressions in equation (18) and equation (19) are the standard result for the double arm Mach-Zehnder interferometer, see for example, Saleh *et al.*, in " Fundamentals of Photonics". New York: Wiley,1991, pp. 703. As expected, the classical Mach-Zehnder interferometer is equivalent to a GMZI with $N = 2$.

The same analysis is used to determine the analytic light intensity functions for differing values of $N$. As $N$ increases the number of active phase shifting elements and the number of terms in equation (14) also increase, resulting in output light intensities which are complicated functions of multiple variables. For instance, the intensities at the output ports of a $3 \times 3$ GMZI are given by

$$I_1^{out} = \frac{I_0}{9}\left\{3+2\left[\cos\gamma_1 -\frac{1}{2}\cos\gamma_2 +\frac{\sqrt{3}}{2}\sin\gamma_2 -\frac{1}{2}\cos\gamma_3 +\frac{\sqrt{3}}{2}\sin\gamma_3\right]\right\}$$

$$I_2^{out} = \frac{I_0}{9}\left\{3+2\left[-\frac{1}{2}\cos\gamma_1 -\frac{\sqrt{3}}{2}\sin\gamma_1 -\frac{1}{2}\cos\gamma_2 -\frac{\sqrt{3}}{2}\sin\gamma_3 +\cos\gamma_3\right]\right\}, \tag{20}$$

$$I_3^{out} = \frac{I_0}{9}\left\{3+2\left[-\frac{1}{2}\cos\gamma_1 +\frac{\sqrt{3}}{2}\sin\gamma_1 +\cos\gamma_2 -\frac{1}{2}\cos\gamma_3 -\frac{\sqrt{3}}{2}\sin\gamma_3\right]\right\}$$

where $\gamma_1 \equiv \Delta\varphi_1 - \Delta\varphi_2$, $\gamma_2 \equiv \Delta\varphi_1 - \Delta\varphi_3$, $\gamma_3 \equiv \Delta\varphi_2 - \Delta\varphi_3$, and input port $i = 1$ has again been arbitrarily chosen.

While the output light intensity distribution for any given light input and set of phase shifts is found using this analysis, the determination of the phase shifts needed to achieve a specified power splitting ratio becomes difficult beyond the simplest case, in which $N = 2$. For larger $N$, the phase shifts needed to achieve a desired output power distribution are preferably determined numerically. A numerical approach is now provided to address this issue. The approach is then applied within the transfer matrix framework.

Variable-Ratio $N$-way Power Splitting

Control of the output intensity distribution is useful in applications such as a tap function, where only a small portion of the light is extracted from a channel. See for example, M. Bachmann *et al.*, in " Overlapping-image multimode interference couplers with a reduced number of self-images for uniform and non-uniform power splitting", *Appl. Opt.*, vol. 34, no. 30, pp. 6898-6910, Oct. 1995, in ring lasers where the splitting ratio of the coupler dictates the operation of the laser. A further description is presented by Pennings, *et al.*, in " Reflection Properties of Multimode Interference Devices, IEEE Photon". *Tech. Lett.*, vol. 6, no. 6, pp. 715-718, June 1994, or in WDM devices where the spectral response is improved through non-uniform power splitting as described by M. R. Paiam and R. I. MacDonald, " Design of phased-array wavelength division multiplexers using multimode interference couplers," *Appl. Opt.*, Vol. 36, no. 21, pp. 5097-5108, July 1997.

Passive, $N$-way power splitters using MMI couplers have been described, for example, see Bachmann, *et al.*, in " Overlapping-image multimode interference couplers with a reduced number of self-images for uniform and non-uniform power splitting," *Appl. Opt.*, vol. 34, no. 30, pp. 6898-6910, Oct. 1995, however, only a few splitting ratios are possible with these devices. Variable-ratio power splitting has been achieved in passive two-port devices using angled MMI couplers as described by Lai, *et al.*, in " Arbitrary ratio power splitters using angled silica on silicon multimode interference couplers," *Electron. Lett.*, vol. 32, no. 17, pp. 1576-1577, Aug. 1996 or the 'butterfly' MMI geometry as described by Besse, *et al.*, in " New 2 × 2 and 1 × 3 Multimode Interference Couplers with Free Selection of Power Splitting Ratios," *J. Lightwave Technol.*, vol. 14, no. 10, pp. 2286-2293, Oct. 1996. However, these devices have not been developed for a general value of $N$. The GMZI structure overcomes these difficulties, in that it provides passive or active variable-ratio power splitting for general values of $N$. Determination of optimum relative phase shifts for operating a GMZI power splitter are now considered.

Numerical Analysis and Optimization Algorithm

In a 1 × $N$ GMZI power splitter with light launched into a single input port $i$, to arbitrarily specify the intensities at the output ports, a first step of solving the vector analogue of equation (12) is performed:

$$\begin{bmatrix} |t_{1i}|^2 \\ |t_{2i}|^2 \\ \vdots \\ |t_{Ni}|^2 \end{bmatrix} I_0 = \begin{bmatrix} I_1^{out} \\ I_2^{out} \\ \vdots \\ I_N^{out} \end{bmatrix}, \tag{21}$$

where $|t_{ki}|^2$ is obtained from equation (14). Equation (21) is a system of $N$ nonlinear equations with $N$ unknowns: the phase shifts $\Delta\varphi_j$.

Rearrangement of equation (21) defines a new vector $Y$:

$$Y \equiv \begin{bmatrix} |t_{1i}|^2 \\ |t_{2i}|^2 \\ \vdots \\ |t_{Ni}|^2 \end{bmatrix} I_0 - \begin{bmatrix} I_1^{out} \\ I_2^{out} \\ \vdots \\ I_N^{out} \end{bmatrix}$$

$$(22)$$

so that the problem is recast as

$$Y(x) = 0, \tag{23}$$

where the required phase shifts are given by

$$x \equiv \begin{bmatrix} \Delta\varphi_1 \\ \Delta\varphi_2 \\ \vdots \\ \Delta\varphi_N \end{bmatrix}, \tag{24}$$

where the vector notation is used for convenience.

The nonlinear system equation (23) is solved numerically using an iterative procedure. It must be noted, however, that for some intensity distributions, where $N > 2$, a real solution to the nonlinear system may not exist. This effect occurs for a class of degenerate distributions, where at least one output intensity is near zero, and the others are not intensity extrema (i.e., 0% or 100%). In these cases, the closest real solution is found, which, in general, results in a small deviation of the output intensities from the specified distribution. This effect arises from an interdependence among the nonlinear equations. When light having an extremum in intensity emerges from a port, equation (14) dictates that light having intensity extrema emerge from all other ports.

The numerical algorithm is described here only in general terms; the details of the mathematical implementation are given in Moré, *et al.*, in " The Levenberg-Marquardt algorithm: implementation and theory," *Numerical Analysis*, ed. G. A. Watson, Lecture Notes in Mathematics 630, Springer-Verlag, pp. 105-116, 1977; and J. E. Dennis, Jr and R. B. Schnabel, in " Numerical methods for unconstrained optimization and nonlinear equations", Englewood Cliffs, NJ: Prentice-Hall, 1983. An initial guess $x_0$ is made, after which the following occurs at each iteration: first, the partial derivatives of $Y(x_0)$ are calculated by a finite difference approximation, using a systematic perturbation of each of the elements of $x_0$. The partial derivatives are then used in the Levenberg-Marquardt set of linear equations to establish a direction in which to search for decreasing values of the function $Y$. A step is then taken in this direction, and the iterate is updated.

A limitation of this numerical method is that an iterate of $x$ may sometimes settle into a local rather than a global minimum. To overcome this, the initial guess $x_0$ should be perturbed significantly, and the analysis repeated. Confidence in the numerical solution is gained when it is consistently obtained from a variety of initial guesses of $x_0$.

Once the required phase shifts $x$ are determined numerically, they are optimized by offsetting the determined phase shifts by a constant amount and shifting individual phase amounts by multiples of $2\pi$. This allows the GMZI to be operated with a driving signal that consumes the least possible power.

In one embodiment, once the optimum phase shifts are found, the GMZI is implementedin a reconfigurable mode, where active phase shifters are used. In another embodiment the GMZI is used in a passive mode, where the phase shifts are achieved by varying the waveguide arm **26** lengths (See Fig. 2). In the passive mode, the waveguide arm lengths are chosen in such a way as to avoid crossing of the waveguides arms **26**. The intended application of the GMZI will dictate whether the GMZI is implemented in an active or a passive mode.

As an example of the $N$-way power splitting function, consider a 4 x 4 GMZI. It is desired to launch a single beam of light into input port **4** where $i$ is arbitrarily chosen as 2and achieve the following arbitrarily chosen, light intensity distribution ratio of light emerging from the output ports **6**:

$$I_k^{out} = \begin{bmatrix} 0.27 \\ 0.01 \\ 0.56 \\ 0.16 \end{bmatrix} I_0 \, , \tag{25}$$

where the numbering of the output ports **6** is from top to bottom, as shown in Fig. 2. Substituting equation (25) into equation (22) and solving for the optimum phase shifts yields:

$$x_{opt} = \begin{bmatrix} -1.37 \\ 0.01 \\ 1.37 \\ 0.13 \end{bmatrix} \text{radians} \, , \qquad I_k^{out} = \begin{bmatrix} 0.2703 \\ 0.0101 \\ 0.5598 \\ 0.1597 \end{bmatrix} I_0 \, . \tag{26}$$

In this example, the maximum phase shift magnitude needed in any single waveguide arm **26** is 1.37 radians which equals 78.5°. The optimization routine ensures that the maximum phase shift magnitude needed to achieve any intensity distribution in any $N$-port GMZI is always $\leq \pi$.

The phase shifts in equation (26) result in an intensity distribution with a maximum deviation of 0.38 % from the distribution specified in equation (25). To achieve this result, the phase shifts must be applied to an accuracy of at least 0.01 radians, which yields a tolerable phase error of $0.01 \times 180/\pi$ or 0.57°. As the accuracy of the applied phase shifts diminishes, the output intensities deviate further from the specified distribution; however, the deviation remains small for even a relatively large change in the applied phase shifts. In this example, it is found that if only a 0.1 radian (5.7°) accuracy in the phase shifts is maintained, the intensity distribution deviates by only 0.62 % from ideal values. In general, the accuracy of solutions varies with a desired intensity distribution and $N$.

Optimum Switching Matrix

Using the numerical method and the above described optimization procedure, a set of optimum phase shifts required to achieve the $N$ switch states of a $1 \times N$ switch is derived. The above procedure is repeated $N$ times, replacing $I_k^{out}$ in equation (22) by the successive columns of the identity matrix of order $N$. The result is $N$ vectors $x$ which form the columns of a matrix, referred to as the optimum switching matrix $X$, which has elements $x_{jk}$. For a given input port $i$, a desired output port is selected by the column $k$, and the rows $j$ give phase shifts that are ideally applied to the arms *j* in order to route light launched into input port *i* to output port *k*. Using a different input port amounts to interchanging the columns of the matrix *X*.

For example, the following optimum switching matrix is found for the 3 × 3 GMZI for *i* = 1:

$$X = \frac{\pi}{3} \begin{bmatrix} 1 & -1 & 1 \\ 1 & 1 & -1 \\ -1 & 1 & 1 \end{bmatrix}, \qquad (27)$$

which demonstrates that it is possible to drive the *N* = 3 GMZI switch with phase shifters controlled by binary logic. The lengths of the phase shifters shown in Fig. 2 are varied so that the application of a voltage with magnitude of V volts induces a phase shift of magnitude $2\pi/3$. The voltage levels 0 and +V thus represent logic levels 0 and 1, respectively.

Binary driving conditions are unique for the *N* = 3 GMZI switch. Generally, as *N* increases, the driving conditions for the phase shifters become increasingly complex. For a *N* = 5 GMZI switch, the optimum switching matrix is given by

$$X = \frac{2\pi}{5} \begin{bmatrix} -1 & 0 & 1 & -1 & 1 \\ -1 & 1 & 0 & 1 & -1 \\ 1 & 1 & -1 & -1 & 0 \\ 1 & -1 & 1 & 0 & -1 \\ 0 & -1 & -1 & 1 & 1 \end{bmatrix}, \qquad (28)$$

demonstrating that control of the switch is possible without complicated circuitry.

The aforementioned description of variable-ratio optical splitting provides a powerful tool. In light of the variable-ratio optical splitter provided, a distinct switching capability as well as splitting would be advantageous. It would also be advantageous to reduce power consumption of any such switching device over similar prior art integrated switching devices.

Theoretical Basis

Passive *N* × *N* GMZI

Referring again to Figure 2, the first to *N*-th waveguide arms **26** are in the form of an open path, i.e., in a substantially linear open path starting at a first end, first waveguide arm **26**, and ending at a second opposing end, *N*-th waveguide arm **26**. No distinction is made between the ends of the input and output ports of the MMI splitter **20** and combiner **24** and the wavelength arms **26** connected thereto since, in practice, these waveguides are fabricated as integral, continuous waveguides. Two different types of *N* × *N* GMZI are also possible, one in which *N* is odd and one in which *N* is even, as explained below.

The *N* × *N* MMI splitter **20** initially distributes input light equally among the waveguide arms **26**, providing *N* distributions, while imposing a relative phase difference amongst the input light as discussed by M. Bachmann, *et al.*, in " General self-imaging properties in *N* × *N* multimode interference couplers including phase relations," *Appl. Opt.*, vol. 33, no. 18, pp. 3905-3911, June 1994. The *N* × *N* MMI combiner **24**, substantially identical to the *N* × *N* MMI splitter **20**, recombines the *N* distributions. By actively controlling the optical path lengths of the *N* waveguide arms **26**, with phase shifters **28**, the relative phases among the *N* distributions are changed. The interference between the *N* distributions in the *N* × *N* MMI combiner **24** is thus controlled, with the result that light launched into an input port **4** may be routed to any of the *N* output ports **6**.

Referring to equation (1) and equation (2) above, since all the waveguide arms **26** are of equal length, no relative phase shift is imparted to the light in the arms of the passive device. The only effect of the waveguide arms **26** is to introduce a temporal delay from the output ports of the splitter to the input ports of the combiner. Therefore, disregarding the presence of the waveguide arms **26**, results in a merging of the *N* × *N* MMI splitter **20** and the *N* × *N* MMI combiner **24** into a single MMI coupler having double the length:

$$L_{GMZI} = \frac{M}{N} 3L_\pi + \frac{M}{N} 3L_\pi = \frac{M}{N} 6L_\pi. \qquad (29)$$

Rearranging equation (29), we obtain two alternate expressions for the GMZI length:

$$L_{GMZI} = \frac{2}{N} 3 L_{\pi} \qquad \text{for } N \text{ odd,} \qquad (30)$$

and

$$L_{GMZI} = \frac{1}{(N/2)} 3 L_{\pi} = \frac{3 L_{\pi}}{K} \qquad \text{for } N \text{ even,} \qquad (31)$$

where $M = 1$ has been used, and

$$N = 2K, \qquad K = 1,2,3,\dots . \qquad (32)$$

Therefore there are two cases to consider: a first case where $N$ is odd and a second case where $N$ is even. Comparing equation (1) and equation (30), it is evident that for $N$ odd, the passive GMZI acts like a single MMI splitter with $M = 2$ and $N$ output distributions. By contrast, upon comparison of equation (1) and equation (31) for $N$ even, it is seen that the passive GMZI acts like a single MMI splitter with a reduced number ($K$) of output distributions.

In both cases, we have $N$ output ports. For $N$ odd, the action of the passive GMZI is trivial: the $N$ output distributions emerge from the $N$ output ports. For $N$ even, there are $N$ output ports, and only $K$ distributions. When light is launched into an input port it is not obvious from which output ports the light will emerge. This depends upon both the input port into which light is launched and the value of $K$. For $N$ even, it is helpful to consider two cases: $K$ even and $K$ odd.

### $\underline{K \text{ even}}$

The passive GMZI acts like an MMI coupler with $K$ output ports and $K$ is even. The geometry of an MMI coupler with an even number of output ports has been described by Bachmann *et. al.*, *ibid* for an $N \times N$ MMI coupler. The $N \times N$ MMI coupler **20, 24** functions as the $N \times N$ MMI splitter **20** or the $N \times N$ MMI combiner **24.**

For an $N \times N$ coupler the spacing of the $N$ input distributions and output distributions are described by intervals of length 2 $W/N$, where $W$ is the coupler width. For an $N \times K$ coupler, however, the spacing of the $K$ output distributions are described by intervals of length:

$$\frac{2W}{K} = \frac{4W}{N} , \qquad (33).$$

In the $N \times N$ coupler, the positions of the input distributions and output distributions are specified by a free parameter $a$, which is limited to the range $0 < a < W/N$, or half an interval length. In the $N \times K$ coupler, the same restriction holds for the input distributions, however, the output distributions are positioned as described by equation (33). A free parameter $\alpha'$ is used to describe the positions of the output distributions, where $0 < \alpha' < W/K$.

For light launched into an input port $i = 1$, $\alpha' = a$, so $K$ self-distributions emerge from the set of output ports:

$$k_1 = 1,4,5,8,9,12,13,\dots . \qquad (34)$$

For light launched into an input port $i = 2$, however, $\alpha' = 2 W/N - a$, so $K$ self-distributions emerge from the set of output ports:

$$k_2 = 2,3,6,7,10,11,14,\dots , \qquad (35)$$

which represents the complement of the set of ports given by $k_1$.

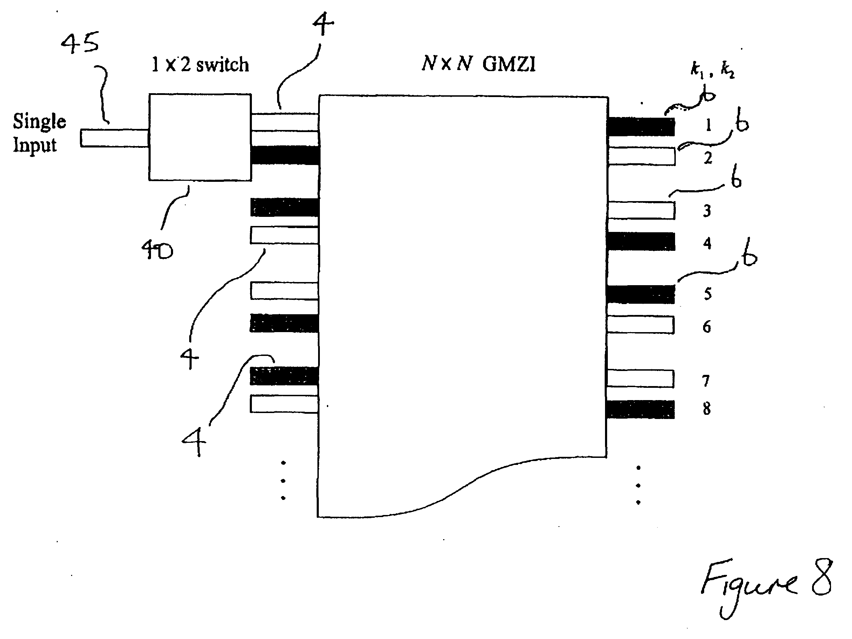

Referring to Figure 6, for the $N \times K$ coupler where $K$ is even, light launched into input ports in the set $k_1$ form $K$ output distributions in the set $k_1$, and light launched into input ports in the set $k_2$ form $K$ output distributions in the set $k_2$. This is written more compactly as:

$$i \in \{k_1\} \rightarrow k = k_1 \qquad (36)$$

$$i \in \{k_2\} \rightarrow k = k_2 \ .$$

For $K$ even, the passive GMZI consists of two superimposed $K \times K$ MMI couplers, a first $K \times K$ MMI coupler **30a** and a second $K \times K$ MMI coupler **30b**, each coupler **30a** and **30b** with input ports and output ports from the same set.

### _K_ odd

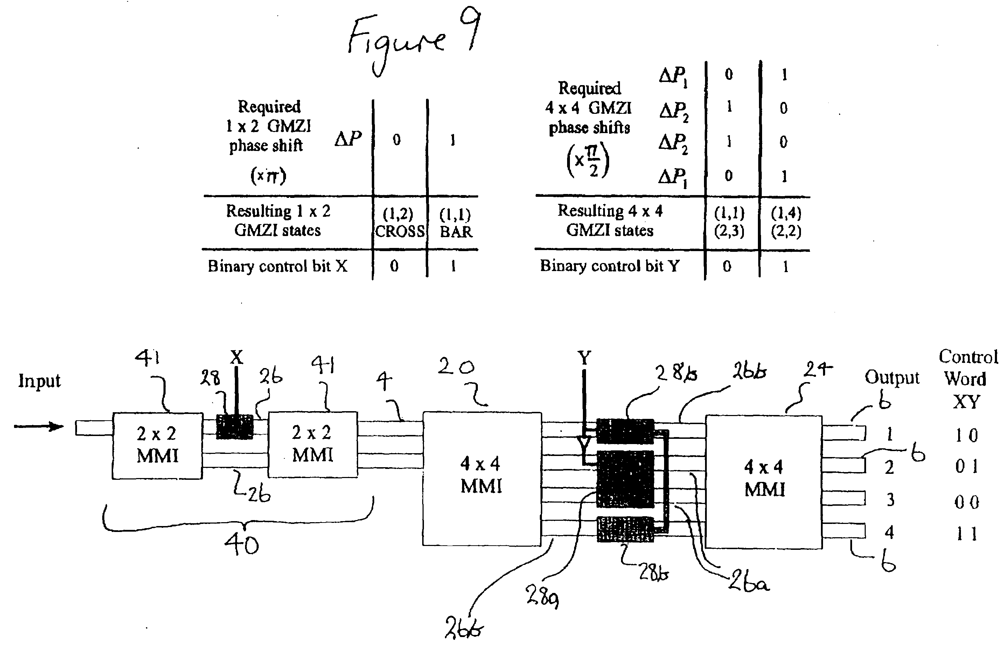

Referring to Figure 7, a diagram wherein $K$ is odd is shown. The spacing of the $N$ output distributions are described by intervals of length 2 _W/N_, except for the first interval of length _W/N_. For the $N \times K$ coupler, the spacing of the $K$ distributions are described by intervals of length given by equation (33), except for the first interval, which has a length:

$$\frac{K}{K} = \frac{2W}{N} \ . \qquad (37)$$

In a similar manner to the case of $K$ even, the positions of the input distributions and output distributions are again described by the free parameters $a$ and $\alpha'$. In this case, however, the presence of an interval of length given by equation (37) results in light launched into input ports in the set $k_1$ forming $K$ output distributions in the set $k_2$, and light launched into input ports in the set $k_2$ forming $K$ output distributions in the set $k_1$. This is written more compactly as:

$$i \in \{k_1\} \rightarrow k = k_2 \qquad (38)$$

$$i \in \{k_2\} \rightarrow k = k_1 \ .$$

For $K$ odd, the passive GMZI consists of two superimposed $K \times K$ MMI couplers, a first $K \times K$ MMI coupler **62a** and a second $K \times K$ MMI coupler **62b**, each coupler **62a** and **62b** with input ports and output ports in different sets. This is shown in Figure 7. The above description of a passive GMZI, is useful in understanding an improved active GMZI according to the invention.

### Active GMZI

By operating $N$ phase shifters **28** on the waveguide arms **26** of the $N \times N$ GMZI, the device functions as a 1 × $N$ switch when the applied phase shifts are multiples of $\pi/N$. $N$ sets of phase shifts, corresponding to the columns of an optimum phase shift matrix $X$, are required to route light launched into a given input port to any of the $N$ output ports. This is shown, for example. by R. M. Jenkins, _et al._, "Novel 1 × $N$ and $N \times N$ integrated optical switches using self-imaging multimode GaAs/AlGaAs waveguides," _Appl. Phys. Lett._, vol. 64, no. 6, pp. 684-686, Feb. 1994., and P. A. Besse, et al., in "The integrated prism interpretation of multileg Mach-Zehnder interferometers based on multimode interference couplers." _Opt. Quant. Electron._, vol. 27, pp. 909-920, 1995.

As $N$ increases, the number of discrete phase shift levels within the matrix $X$ also increases, however, a simplification of the phase shifts is possible. When $N$ is even, the columns of $X$ are divided into two sets of $K$ columns each. For ease of description, one set of columns is designated " minimal" and the other is designated " non-minimal".

By inspection of the matrix $X$ for $N$ up to 20, the minimal sets are found to possess the following properties:

1. The phase shifts are symmetric about a horizontal line bisecting the $N$ phase shifters which results in a reduced number, $K$, of independent phase shifts;

2. The $K$ sets of phase shifts are anti-symmetric in pairs, about a horizontal line bisecting the $K$ sets of $K$ phase shifts which reduces the number of sets of controlling phase shifts;

3. The phase shifts have a range, which is the smallest of any of the $N$ columns in $X$ which minimizes the active driving requirements; and,

The phase shifts have the smallest number of discrete levels of any of the $N$ columns in $X$ which simplifies the control logic.

It is reasonable to predict that the above properties are applicable for all even values of $N$.

By contrast, the non-minimal sets do not have the properties stated above: they are in general neither symmetric nor anti-symmetric, nor do they necessarily have the smallest maximum phase shift or the smallest number of discrete levels of any of the columns in $X$.

Each column of $X$ gives the phase shifts required to route light launched into the input port $i$ to the output port $k$ corresponding to the column number, so the sets of minimal and non-minimal columns correspond to sets of minimal and non-minimal output ports. These are interpreted as the output ports, to which light is switched using minimal phase shifts, and using non-minimal phase shifts, respectively. Comparing the minimal and non-minimal port numbers to the analysis of the passive GMZI, it is found that the minimal set always corresponds to the set to which the input light is distributed In the passive GMZI. Depending on the value of $K$, referring to either Figure 6 or Figure 7, the following general rule is determined: routing light launched into any of the input ports of a given $K \times K$ coupler to any of the output ports of the same $K \times K$ coupler is accomplished using minimal phase shifts, while routing light launched into any of the input ports of a given $K \times K$ coupler to any of the output ports of a different $K \times K$ coupler requires non-minimal phase shifts. This allows improved design of $1 \times N$ GMZI switches.

Simultaneous routing is also possible, because the $K \times K$ couplers are identical. In other words, the same phase shifts which cross-connect ports in a given $K \times K$ coupler simultaneously cross-connect ports in the other $K \times K$ coupler. The set of $K$ cross-connections possible in both $K \times K$ couplers is therefore achieved using only the $K$ sets of minimal phase shifts.

**Improved $1 \times N$ Switch**

<u>Theory and Design</u>

From the above properties, and Figures 6 and 7, it is evident that the minimal and non-minimal output ports correspond to either set $k_1$ or set $k_2$. This result shows that, for light launched into a single input port and $N$ even, the $N \times N$ active GMZI is operated as a $1 \times K$ switch, using only minimal phase shifts. If it is possible to remove the restriction of a single input port and allow the capability of switching light between input ports from different sets, then it is possible to access the alternate $K$ outputs as well, resulting in a $1 \times N$ switch that is operated using only $K$ sets of minimal phase shifts.

Referring to Figure 8 and Figure 9, the restriction of launching a beam of light into a single input port of a GMZI is removed by utilizing a $1 \times 2$ switch **40**. The $1 \times 2$ switch **40** has a single input port **45** and output ports of the $1 \times 2$ switch 40 are optically coupled to any two GMZI input ports **4** from different sets The different sets correspond to the set numbering given by equation (34) and equation (35). The $1 \times 2$ switch **40** allows switching of a single beam of light launched into the input port of the $1 \times 2$ switch **40** into any of two GMZI input ports **4** from the different sets. The $1 \times 2$ switch **40** is not restricted to a single input port **45**. The $1 \times 2$ switch **40** in some cases is formed from two 2 x 2 MMIs **41** optically coupled by two waveguide arms **26**, at least one of the two waveguide arms **26** having a phase shifter **28**. Any desired output of light is then achieved with minimal phase shifts, by operating the $1 \times 2$ switch **40** such that the input port of the GMZI corresponds to the same $K \times K$ coupler as the output port.

The improved $1 \times N$ switch has a number of advantages over the standard $1 \times N$ GMZI switch. The minimal sets of phase shifts are symmetric, as stated in property 1, above. This means that it is possible to physically connect the phase shifters or their controllers in pairs, so that only $K + 1$ rather than $N$ independent phase shifters are needed to operate the device; an additional phase shifter is needed to operate the $1 \times 2$ switch at the GMZI input ports, if a $1 \times 2$ GMZI is chosen as the switch. From property 2, the improved switch is controlled using a number of phase shifts given by

$$\frac{K}{2} = \frac{N}{4} \qquad \text{for } K \text{ even} \qquad (39)$$

or

$$\frac{K+1}{2} = \frac{N}{4} + \frac{1}{2} \qquad \text{for } K \text{ odd} \qquad (40)$$

instead of $N$ distinct sets of phase shifts. Furthermore, from properties 3 and 4, the range of phase shifts are minimized, and the number of different phase shift levels is much smaller than needed to operate an isolated $N \times N$ GMZI switch.

The number of phase shifters **28** and their positions are generalized for $N$ waveguide arms **26**. The waveguide arms **26** are disposed along an open path and grouped as pairs of waveguide arms, two substantially central waveguide arms **26** forming a first pair **26a** of waveguide arms, and each subsequent pair of waveguide arms **26b**, and so on formed by two waveguide arms, one on each side of the already grouped waveguide arms **26a, 26b, ...** and wherein two individual waveguide arms that form a pair have their individual optical path lengths changed in unison such that both optical path lengths of the pair are changed by substantially the same amount. Figure 9 shows two grouped sets of waveguide arms **26**, namely **26a** and **26b**. The phase shifter **28a**, which controls optical path length of the first pair of waveguide arms **26a**, and the phase shifter **28b**, which controls optical path length of a first subsequent pair of waveguide arms **26b**, are both shown as single phase shifters, however this does not preclude the possibility of using individual phase shifters, while controlling each pair by a single power source and/or controller.

The improved $1 \times N$ switch according to the invention is exemplified below by way of an example.

**Improved 1 × 4 Switch**

The smallest improved $1 \times N$ switch occurs for $N = 4$. Using well known phase relations for MM1 couplers, an optimum switching phase shift matrix is determined for launching a beam of light into an arbitrarily chosen input port $i = 1$,:

$$X = \frac{\pi}{2} \begin{bmatrix} 0 & -1 & -1 & 1 \\ 1 & -1 & 1 & 0 \\ 1 & 1 & -1 & 0 \\ 0 & 1 & 1 & 1 \end{bmatrix}. \tag{41}$$

A method of determining the matrix is explained by M. R. Paiam and R. I. MacDonald, in " Design of phased-array wavelength division multiplexers using multimode interference couplers," *Appl. Opt.*, Vol. 36, no. 21, pp. 5097-5108, July 1997.

In this case $K$ is even. Using equation (36) and the properties above, we see that since $i$ belongs to the set $k_1$, then the minimal phase shifts correspond to the output ports $k_1$, or columns 1 and 4. These phase shift sets satisfy the four properties stated above: They are symmetric about a horizontal line bisecting the matrix $X$, resulting in 2 sets of independent phase shifts, given in bold; The 2 sets of 2 phase shifts are anti-symmetric with respect to each other, about a line bisecting the 2 phase shifts; The phase shifts have a range [0, $\pi/2$] which is the smallest of any of the $N$ columns in $X$; and, The phase shifts have two discrete levels, which is the smallest number possible from the $N$ columns in $X$.

The minimal phase shifts route light launched into the input port $i = 1$ to output port number 1 and output port number 4. From equation (36), however, it is evident that the remaining output ports number 2 and number 3 are accessed by routing the input light to a member of the set $k_2$. For simplicity, the input $i = 2$ is chosen.

Using phase relations of MM1 couplers as provided by M. R. Paiam and R. I. MacDonald, in "Design of phased-array wavelength division multiplexers using multimode interference couplers," Appl. Opt., Vol. 36, no. 21, pp. 5097-5108, July 1997., it is possible to show that the same set of phase shifts corresponding to column 1 in equation (41), or the connection pair $(i, k) = (1,1)$ also yields the connection pair $(2,3)$. Similarly, column 4 in equation (41) corresponds to the connection pairs (1,4) and (2,2).

All four states of a $1 \times 4$ switch are therefore accessible if a $1 \times 2$ switch is used to switch between the Input ports $i = 1$ and $i = 2$. The operation of this improved $1 \times 4$ switch is shown in Figure 9. As a consequence of the two symmetry properties, the $4 \times 4$ GMZI is controlled using only a single set of two phase shifts. When this set is represented by a binary value, 0 or 1, then control of the $4 \times 4$ GMZI portion of the switch is possible using a single binary bit. An additional binary bit is used to control the $1 \times 2$ switch, so that it is possible to control the improved $1 \times 4$ switch shown in Figure 9 with a 2-bit binary word.

Though the above description addresses 1XN switches, it is evident that GMZIs are useful as NXN switches. Unfortunately, for a particular GMZI, some switching states are not achievable. The use of devices as described above with enhanced switching capabilities is described below.

Expanded Capacity Switching and $N \times N$ Non-blocking Switching

Referring again to Figure 2, the $N \times N$ GMZI **5** is capable of variably routing beams of light provided to each of a plurality of input ports to a plurality of output ports. However, $N$ switch states of the $N \times N$ GMZI **5** allow only $N$

possible variations of said routing. In contrast, a non-blocking optical switch architecture is capable of providing $N$ factorial variations, an entire set, of routing of beams of light provided to the input ports to the output ports.

The switching capacity of the $N \times N$ GMZI **5** is increased by optically coupling at least two input ports **4** of the $N \times N$ GMZI **5** to an optical switch, for example, an $(N - 1) \times (N - 1)$ optical switch. An example of an expanded capacity optical switch is a 4 x 4 GMZI having two ports thereon optically coupled to two ports of a 2 x 2 GMZI.

According to a further embodiment, GMZIs of different dimensions are used to achieve an $N \times N$ non-blocking optical switch. Below, two embodiments of non-blocking optical switches according to the invention are described; (i) a cascaded design; and (ii) a balanced design.

Cascaded Design

The simplest GMZI is a $2 \times 2$ optical switch, which is non-blocking. The switch has two input ports and two output ports and light can be routed from either input port to either output port The possible routings are referred to herein as light routing permutations. Both light-routing permutations are possible for the $2 \times 2$ optical switch, and the light routing permutations are controlled by a single phase shift of magnitude $\pi$ in either waveguide arm **26**.

To create a $3 \times 3$ non-blocking optical switch six light routing permutations are required. The six light routing permutations are listed in the first column of Table 1. The first column of Table 1 lists output light routing permutations for non-blocking operation, and the second column lists light routing permutations available from a $3 \times 3$ GMZI. The first two rows of the first column are described as follows. The first row of the first column of Table 1 describes: a beam of light being routed from an input port number 1 to an output port number 1, i.e., (1,1); a beam of light being routed from an input port number 2 to an output port number 2, i.e., (2,2); and a beam of light being routed from an input port number 3 to an output port number 3, i.e., (3,3). The second row of the first column of Table 1 describes: (1,1); (2,3); and (3,2). The remaining rows and columns are understood from the preceding description by one of skill in the art.

It is evident from Table 1 that the light routing permutations are divided into three sets of two light routing permutations, with routing from one input port kept constant in each set. The remaining two ports are arranged either in ascending or descending order.

The $3 \times 3$ GMZI is capable of only three distinct light routing permutations, listed in the second column of Table 1, namely: [(1,1), (2,3), (3,2)]; [(1,2), (2,1), (3,3)]; and [(1,3), (2,2), (3,1)]. Each of these three light routing permutations corresponds to a single member from each of the three sets in the first column. A further capability of switching light from two latter output ports of the GMZI from ascending to descending order, and vice-versa, to obtain the entire set of six light routing permutations is advantageous. As noted above, a $2 \times 2$ GMZI is capable of providing the function of switching tight from each of two input ports of the GMZI to each of two output ports thereof. In one embodiment, the $3 \times 3$ non-blocking optical switch is therefore realized using a $3 \times 3$ GMZI with two output ports optically coupled to a $2 \times 2$ GMZI. Preferably the ports are adjacent ports.

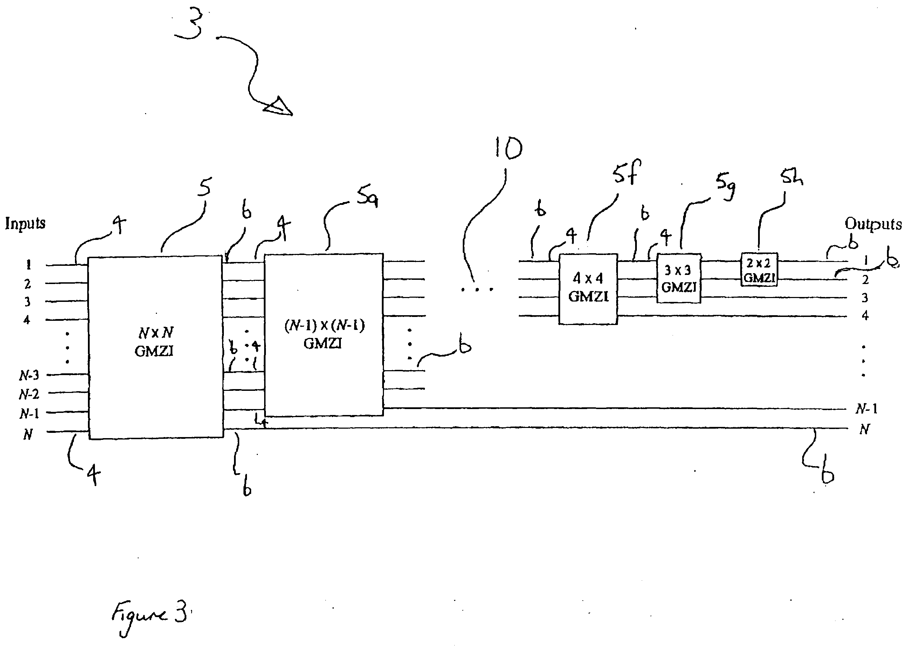

The same approach is used to create larger non-blocking optical switches. For instance, in a $4 \times 4$ non-blocking optical switch, 24 light routing permutations are required. A $4 \times 4$ GMZI has four tight routing permutations, and a $3 \times 3$ non-blocking optical switch connected to three of the four GMZI output ports provides at least six light routing permutations for each of the four GMZI light routing permutations. In this manner, the $4 \times 4$ non-blocking optical switch is realized by cascading a $4 \times 4$ GMZI, a $3 \times 3$ GMZI, and a $2 \times 2$ GMZI. In general, $N - 1$ cascaded GMZIs form an $N \times N$ non-blocking optical switch as shown in Figure 3.

Referring to Figure 3, a generic cascaded configuration of the cascaded $N \times N$ non-blocking optical switch **3** is shown. An $N \times N$ GMZI **5** has 1 to $(N - 1)$ output ports **6** optically coupled to 1 to $(N -1)$ input ports **4** of an $(N - 1) \times (N - 1)$ GMZI **5a**. The cascaded non-blocking switch is illustrated with a break in structure **10** from the $(N - 1) \times (N - 1)$ GMZI **5a** to a $4 \times 4$ GMZI **5f**. The break in structure **10** after the $(N -1) \times (N - 1)$ GMZI **5a** is used to indicate that the number of cascaded GMZIs varies according to design requirements. The cascaded non-blocking optical switch **3** terminates with the first three output ports **6** of a 4 x 4 GMZI **5f** optically coupled to three input ports **4** of a $3 \times 3$ GMZI **5g,** and the first two output ports **6** of a $3 \times 3$ GMZI **5g** optically coupled to two input ports of a $2 \times 2$ GMZI **5h**. The $N \times N$ GMZI **5** is upstream. Alternatively, the 2 x 2 GMZI **5h** is upstream. Further alternatively, both are upstream and downstream when light propagates bi-directionally.

If the $N \times N$ GMZI **5** is removed from the $N \times N$ non-blocking optical switch **3** an $(N - 1) \times (N - 1)$ non-blocking optical switch remains. The $(N - 1) \times (N - 1)$ non-blocking optical switch comprises $N - 2$ GMZI's each having a different number of waveguide arms, the number of waveguide arms ranging from 2 to $N - 1$, where the $N - 2$ GMZI's are arranged in descending order by the number of waveguide arms, such that each GMZI other than a terminal GMZI with 2 waveguide arms **5h** and an initial GMZI with $N - 1$ waveguide arms **5a** is disposed between two GMZI's - one with one more waveguide arm and one with one less waveguide arm - each GMZI having a single free output port and each port other than the free output port within a GMZI optically coupled to one and only one port of an adjacent GMZI. Of course, it is possible to rearrange the GMZI order so long as the available permutations provide for non-blocking operation.

For a desired light routing permutation from the $N \times N$ non-blocking optical switch **3**, consider first a beam of light launched into an input port **4** to be routed to an $N$-th output port **6**, and configure the $N \times N$ GMZI **5** such that the beam of light launched into input port **4** emerges from the $N$-th position of the output port **6** of the $N \times N$ GMZI **5**. Secondly, consider a beam of light launched into another input port **4** to be routed to an $(N - 1)$-th output port **6**, and configure the $(N -1) \times (N - 1)$ GMZI **5a** such that light from this input port emerges from the $(N - 1)$-th position the output port of the $(N - 1) \times (N - 1)$ GMZI **5a**, and so forth. Alternatively, other orderings of the $(N - 2)$ GMZI's result in a similar benefit. For example, a $4 \times 4$, a $2 \times 2$, and a $3 \times 3$ all in that order provide a $4 \times 4$ non-blocking switch.

In addition, each light routing permutation corresponds to a unique state of the optical switch providing an efficient design. Conversely, the number of possible switch states is equal to the number of possible light routing permutations, which ensures that there is no redundancy in the design. This permits use of a small number of MMI couplers, phase shifters, and waveguide crossings to achieve $N$ factorial light routing permutations. Specifically, $(2N - 2)$ MMI couplers, $(N^2 + N - 2)/2$ phase shifters, and zero waveguide crossings are required.

Attenuations resulting from paths traversed by optical signals in the cascaded design are not identical. A signal emerging from the $N$-th output has traversed two MMI couplers, while the signal emerging from the $(N - 1)$-th output port has traversed four MMI couplers, while the signal emerging from the first output port has traversed all $(2N - 2)$ MMI couplers. Since each MMI coupler has a finite excess loss, a signal emerging from the $N$-th output port is the least attenuated, while a signal emerging from the first output port is the most attenuated. To overcome an imbalance of attenuation, beams of light emerging from the output ports are attenuated and/or amplified such that the beams of light are of similar intensity.


Balanced Design for Even values of $N$


Another approach to balancing $N \times N$ non-blocking optical switches is by optically coupling smaller optical switches to each of the input ports **4** and the output ports **6** of an $N \times N$ GMZI **5**. As is evident, additional light routing permutations necessary for non-blocking operation are achieved whilst maintaining a symmetric balanced design.

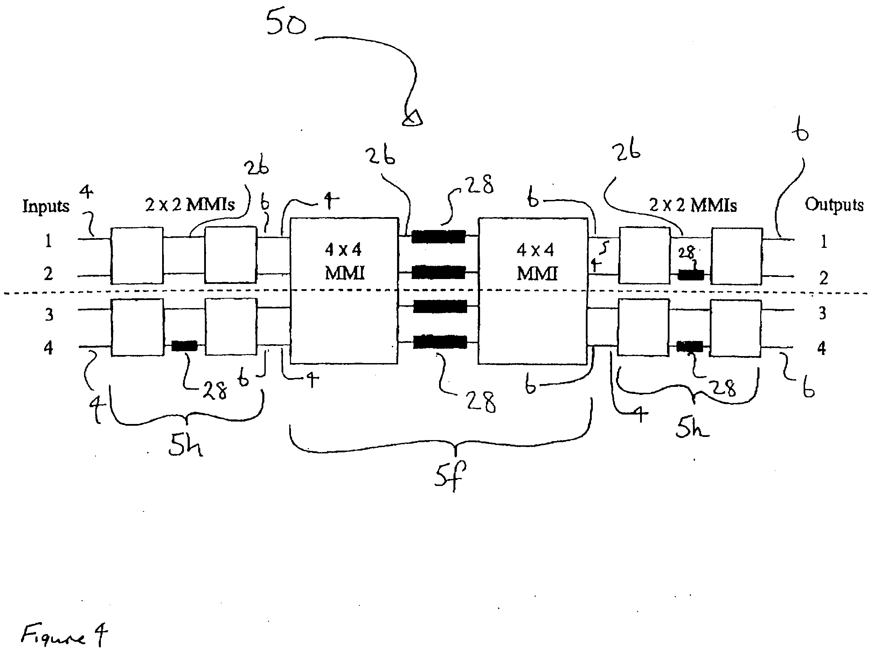

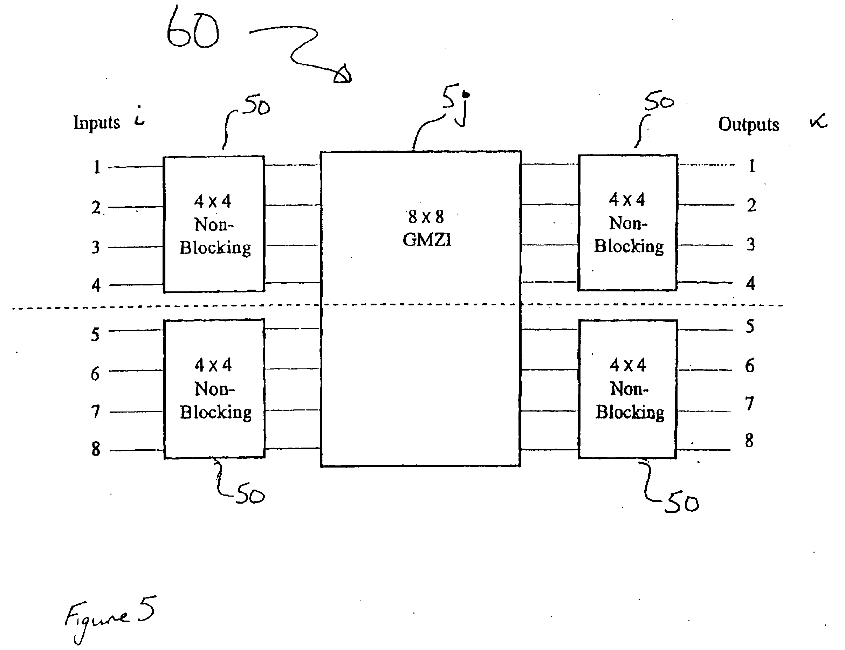

Referring to Figure 4, the basic layout of a balanced $4 \times 4$ non-blocking optical switch **50** is formed from a $4 \times 4$ GMZI **5f** and four $2 \times 2$ GMZIs **5h**. The $4 \times 4$ GMZI **5f** is constructed in a similar manner as described in Figure 2, in which $N = 4$. The $4 \times 4$ GMZI **5f** is shown having four input ports **4** and four output ports **6**. The $2 \times 2$ GMZIs **5h** are also constructed in a similar manner as described in Figure 2, in which $N = 2$, however the $2 \times 2$ GMZIs **5h** only require one waveguide arm **26** to have a phase shifter **28** in order to function as optical switches. Hence, a $2 \times 2$ GMZI **5h** is capable of accessing all of its switch states with only a single phase shifter **28**. The first and second input ports **4** of the $4 \times 4$ GMZI are optically coupled to two output ports **6** of a first $2 \times 2$ GMZI **5h**. The second and third input ports **4** of the $4 \times 4$ GMZI **5f** are optically coupled to two output ports **6** of a second $2 \times 2$ GMZI **5h**. The first and second output ports **6** of the $4 \times 4$ GMZI **5f** are optically coupled to two input ports **6** of a third $2 \times 2$ GMZI. The third and fourth output ports **6** of the $4 \times 4$ GMZI **5f** are optically coupled to two input ports **6** of a fourth $2 \times 2$ GMZI. Preferably, the balanced $4 \times 4$ non-blocking switch is constructed such that no waveguide paths cross.

Three active $2 \times 2$ GMZIs **5h** allow $4*2^3 = 32$ light routing permutations to be achieved, with redundancy. Therefore, a passive $2 \times 2$ GMZI may be used in place of one of the four $2 \times 2$ GMZI's. The position of the passive $2 \times 2$ GMZI may be is chosen arbitrarily. The $4 \times 4$ non-blocking optical switch **50** is balanced, since each path from an input port to an output port traverses two $4 \times 4$ MMIs and four $2 \times 2$ MMIs. Also, non-blocking operation is achieved. Within a resulting 32 light routing permutations are the threshold 24 unique light routing permutations required for a $4 \times 4$ optical switch to operate as a non-blocking optical switch. Some of the 32 tight routing permutations are redundant.

In this design both balanced and non-blocking operation are achieved, but with the tradeoff that the configuration of the optical switch is more complex. In the balanced $4 \times 4$ non-blocking optical switch **50**, the 32 possible light routing permutations are not unique so in some instances different switch configurations are used to achieve a given permutation. Consequently, there are numerous ways to achieve some of the 24 light routing permutations required for the balanced $4 \times 4$ non-blocking optical switch **50**. In some instances, determination of the GMZI states to achieve a given permutation are more complex than for the cascaded design. Of course, when a look up table is used for storing the GMZI states, there is no additional complexity.

A set of cross-connects $(i, k)$ for the $4 \times 4$ GMZI **5f** is shown in Table 2. A configuration state of the GMZI corresponds to a single row. An imaginary bisection line (dashed line) drawn in Figure 4 splits the $N \times N$ GMZI. This is indicated in Table 2 by a dashed line. The set of all possible crossovers of the input ports $i$ from one side of the bisection line to the output ports $k$ on the other side is obtained within the four GMZI states. Hence, non-blocking operation is possible using a $4 \times 4$ GMZI **5f**. In Figure 4, consider an imaginary line that bisects the optical switch symmetrically along its path. This line bisects the $4 \times 4$ GMZI **5f**, but does not cross any of the other components. In Table 2, this bisection of the $4 \times 4$ GMZI **5f** is represented by shading the inputs on the top and bottom portions of the GMZI differently. For non-blocking operation, the optical switch must be capable of routing light launched into any possible number of input ports from the top half of the optical switch to the same number of output ports from the bottom half, and vice-versa. This is because the $4 \times 4$ GMZI **5f** is the only region in the optical switch where tight launched into input ports within the top half of the optical switch is capable of being routed to the bottom half of optical switch, and vice-versa. The 2 × 2 GMZIs **5h** are confined to routing tight within either the top or bottom half of the device, and therefore cannot perform this "crossover" function. In this example, the 4 × 4 GMZI **5f** is capable of 0, 1, and 2 crossovers of input signals from the top half to output ports in the bottom half, and vice-versa. It is this property of the 4 × 4 GMZI **5f** which results in non-blocking operation of the 4 × 4 optical switch **50**.

To configure the balanced 4 x 4 non-blocking optical switch **50**, first consider the light routing permutation to determine how many crossovers of the bisection line are necessary. Second, set the 4 × 4 GMZI **5f** to the corresponding state, determined from Table 2. Third, the 2 × 2 GMZIs are each set in either the bar or cross state to achieve the desired permutation. In this manner, a control table for the 4 × 4 optical switch is derived. One possible set of control states for the 4 × 4 balanced non-blocking optical switch is given in Table 3. The 4 × 4 GMZI state corresponds to the relevant row in Table 2, and is abbreviated by the first pair ($i$, $k$). In this configuration, the top left 2 × 2 GMZI is operated in the passive, cross-state, as in Figure 4. The efficiency of this design approach, however, is obtained at the expense of driving the fourth 2 × 2 GMZI switch. Because only three of the four possible 4 × 4 GMZI **5f** states are used, all four 2 × 2 GMZIs **5h** must now be capable of active operation.

From the above description, it is appreciated that a balanced non-blocking optical switch results when a passive 2 x 2 GMZI **5h** is replaced by a device that attenuates light entering or exiting ports to substantially the same extent as the passive 2 x 2 GMZI **5h**. A similar attenuation of beam power is found for a beam passing through a specific attenuator as that for a beam passing through the 2 x 2 GMZI **5h**.

As detailed above, when considering the balanced 4 x 4 non-blocking optical switch **50** comprising the 4 x 4 GMZI **5f** a number of possible configurations exist. A first configuration is one in which all four waveguide arms **26** of the 4 × 4 GMZI have a means for changing their optical length and the 4 × 4 GMZI is optically coupled to four 2 × 2 GMZIs. Optionally, one of the 2 × 2 GMZIs is passive, i.e., cross-state, and all possible switching states are obtainable. Alternatively, one of the 2 × 2 GMZIs has no means for changing optical path length of connecting waveguide arms **26** between two MMIs that make up the 2 × 2 GMZI. In another embodiment one of the 2 × 2 GMZIs is replaced by a medium or any device that attenuates a light beam to substantially the same degree as a beam passing through the 2 × 2 GMZI.

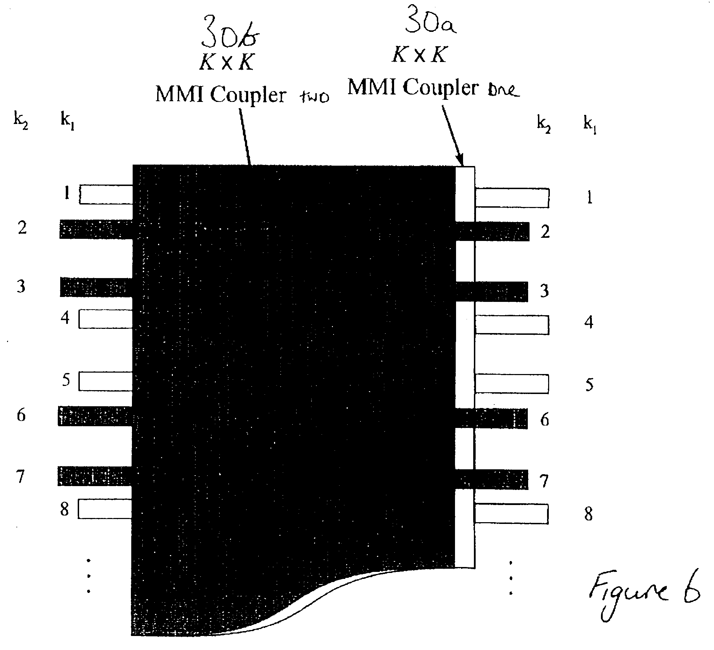

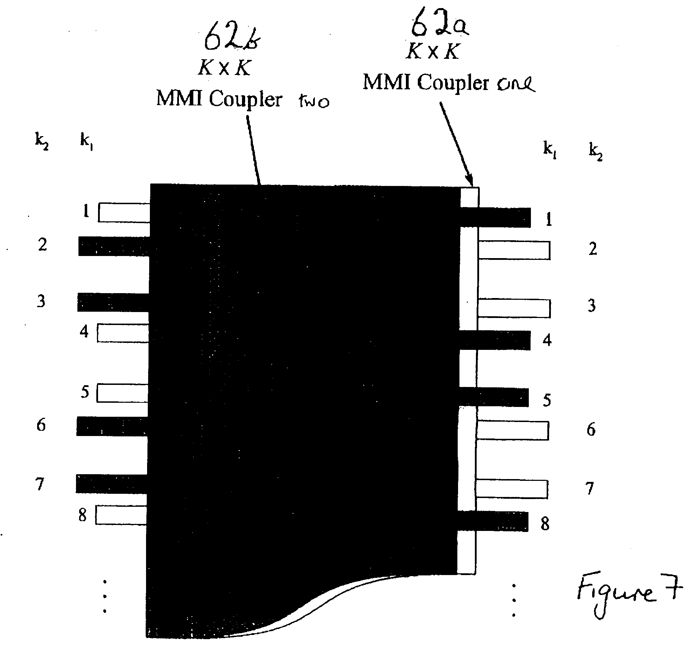

In a similar manner, the design of balanced non-blocking optical switches is possible for larger values of $N$, where $N$ is even. A bisection line is drawn in the cross-connect table of the $N \times N$ GMZI. The cross-connect capability of the $N \times N$ GMZI ensures that every possible number of crossovers is achievable within the $N$ states. The $N \times N$ balanced non-blocking optical switch is formed by connecting the ports on a given side of the bisection line to a smaller non-blocking optical switch. In general, the smaller non-blocking optical switches are operated actively. As an example of a balanced optical switch configuration for larger $N$, referring to Figure 5, the basic layout of a balanced 8 × 8 non-blocking optical switch **60** is formed from an 8 x 8 GMZI **5j** and four 4 × 4 non-blocking optical switches **50**. The 8 × 8 GMZI **5j** is constructed in a similar manner as described in Figure 2, however, waveguide arms **26** and phase shifters **28** are not shown. The 4 × 4 non-blocking optical switches **50** are constructed in a similar manner as described in Figure 4. The 8 × 8 GMZI **5j** and the four 4 × 4 non-blocking optical switches **50** are shown as rectangular boxes with input ports **4** and output ports **6**. The 8 × 8 non-blocking optical switch **60** is constructed in a similar manner to the non-blocking optical switch described in Figure 4. In Table 4 cross-connects for the 8 × 8 GMZI **5j** are given. Table 4 provides the set of cross-connects ($i$, $k$) for the 8 × 8 GMZI **5f** in which a given state of the 8 × 8 GMZI corresponds to a single row. The set of all possible crossovers about a line that divides the device into two regions (shown dashed) is obtained within the eight GMZI states. Hence, non-blocking operation is possible using the 8 × 8 GMZI. The input ports and the output ports are bisected as indicated by the shading, and the number of crossovers for each state are counted. Since the ports are divided into groups of four, it is possible to connect balanced 4 × 4 non-blocking optical switches to both sides of the 8 × 8 GMZI to obtain the necessary light routing permutations for the 8 × 8 balanced non-blocking optical switch.

It is possible to write a software program to determine the GMZI states needed to achieve a desired output permutation. Configuration of the GMZIs follows the procedure used in the 4 × 4 balanced non-blocking optical switch. The program first determines which of the GMZI states yields the number of crossovers indicated by the desired output permutation. Once these states are determined, the configuration tables of the smaller non-blocking optical switches are used to arrive at the desired permutations. Optionally, the software program optimizes the switch to eliminate unnecessary phase shifters and to minimise required power for driving the phase shifters where possible. As mentioned previously, the configuration states are not unique, and it may be possible to operate a number of the smaller component GMZIs in a passive mode.

From the above described switches, it is evident that by optically coupling two GMZIs in series, a greater switching capacity is obtained over an isolated GMZI.

Numerous other embodiments may be envisaged without departing from the spirit and scope of the invention.

**Table 1.**

| Light Routing Permutations | | | 3 × 3 GMZI States | | |
|---|---|---|---|---|---|
| 1 | 2 | 3 | | | |
| 1 | 3 | 2 | 1 | 3 | 2 |
| 2 | 1 | 3 | 2 | 1 | 3 |
| 2 | 3 | 1 | | | |
| 3 | 1 | 2 | | | |
| 3 | 2 | 1 | 3 | 2 | 1 |

**Table 2.**

| 4 × 4 GMZI Switch State | | | | Crossovers |
|---|---|---|---|---|
| (1,1) | (2,3) | (3,2) | (4,4) | 1 |
| (1,2) | (2,1) | (3,4) | (4,3) | 0 |
| (1,3) | (2,4) | (3,1) | (4,2) | 2 |
| (1,4) | (2,2) | (3,3) | (4,1) | 1 |

**Table 3.**

| Light Routing Permutation | | | | 4 × 4 GMZI State | 2 × 2 GMZI States | | |
|---|---|---|---|---|---|---|---|
| | | | | | Lower Left | Top Right | Lower Right |
| 1 | 2 | 3 | 4 | (1,2) | CROSS | BAR | BAR |
| 1 | 2 | 4 | 3 | (1,2) | BAR | BAR | BAR |
| 1 | 3 | 2 | 4 | (1,4) | CROSS | CROSS | CROSS |
| 1 | 3 | 4 | 2 | (1,4) | CROSS | CROSS | BAR |
| 1 | 4 | 2 | 3 | (1,4) | BAR | CROSS | CROSS |
| 1 | 4 | 3 | 2 | (1,4) | BAR | CROSS | BAR |
| 2 | 1 | 3 | 4 | (1,2) | BAR | CROSS | CROSS |
| 2 | 1 | 4 | 3 | (1,2) | CROSS | CROSS | CROSS |
| 2 | 3 | 1 | 4 | (1,1) | BAR | BAR | BAR |
| 2 | 3 | 4 | 1 | (1,1) | BAR | BAR | CROSS |
| 2 | 4 | 1 | 3 | (1,1) | CROSS | BAR | BAR |
| 2 | 4 | 3 | 1 | (1,1) | CROSS | BAR | CROSS |
| 3 | 1 | 2 | 4 | (1,4) | CROSS | BAR | CROSS |
| 3 | 1 | 4 | 2 | (1,4) | CROSS | BAR | BAR |
| 3 | 2 | 1 | 4 | (1,1) | BAR | CROSS | BAR |
| 3 | 2 | 4 | 1 | (1,1) | BAR | CROSS | CROSS |
| 3 | 4 | 1 | 2 | (1,3) | CROSS | CROSS | CROSS |
| 3 | 4 | 2 | 1 | (1,3) | CROSS | CROSS | BAR |

26

| 4 | 1 | 2 | 3 | (1,4) | | BAR | BAR | CROSS |
| 4 | 1 | 3 | 2 | (1,4) | | CROSS | BAR | BAR |
| 4 | 2 | 1 | 3 | (1,1) | | CROSS | CROSS | BAR |
| 4 | 2 | 3 | 1 | (1,1) | | CROSS | CROSS | CROSS |
| 4 | 3 | 1 | 2 | (1,3) | | CROSS | BAR | CROSS |
| 4 | 3 | 2 | 1 | (1,3) | | CROSS | BAR | BAR |

**Table 4.**

| 8 × 8 GMZI Switch State | | | | | | | | Crossovers |
|---|---|---|---|---|---|---|---|---|
| (1,1) | (2,3) | (3,2) | (4,5) | (5,4) | (6,7) | (7,6) | (8,8) | 1 |
| (1,2) | (2,1) | (3,4) | (4,3) | (5,6) | (6,5) | (7,8) | (8,7) | 0 |
| (1,3) | (2,5) | (3,1) | (4,7) | (5,2) | (6,8) | (7,4) | (8,6) | 2 |
| (1,4) | (2,2) | (3,6) | (4,1) | (5,8) | (6,3) | (7,7) | (8,5) | 1 |
| (1,5) | (2,7) | (3,3) | (4,8) | (5,1) | (6,6) | (7,2) | (8,4) | 3 |
| (1,6) | (2,4) | (3,8) | (4,2) | (5,7) | (6,1) | (7,5) | (8,3) | 2 |
| (1,7) | (2,8) | (3,5) | (4,6) | (5,3) | (6,4) | (7,1) | (8,2) | 4 |
| (1,8) | (2,6) | (3,7) | (4,4) | (5,5) | (6,2) | (7,3) | (8,1) | 3 |

## Claims

1. A variable-ratio optical power splitter comprising: a splitting region for splitting light into $N$ sub-beams, the splitting region having $P$ input ports, each input port for receiving light;

   a combining region having $N$ output ports, the combining region for receiving the $N$ sub-beams, for combining the $N$ sub-beams to produce combined sub-beams, and for providing the combined sub-beams to at least one of the $N$ output ports;

   $N$ waveguide arms coupling the splitting region to the combining region each for guiding a sub-beam from the $N$ sub-beams from the splitting region to the combining region, where $N$ is greater than 2; and

   a controller for changing an optical path length of at least one of the $N$ waveguide arms, such that a predetermined intensity state other than an intrinsic switching state emerges from the $N$ output ports.

2. A variable-ratio optical power splitter according to claim 1, wherein the splitting region comprises a first $N \times N$ multimode interference coupler having $N$ input ports and $N$ output waveguides, the combining region comprises a second $N \times N$ multimode interference coupler having $N$ input waveguides and $N$ output ports, and the N waveguide arms comprises $N$ output waveguides of the first $N \times N$ multimode interference coupler optically coupled to $N$ input waveguides of the second $N \times N$ multimode interference coupler thereby forming an integrated optical $N \times N$ Mach-Zehnder interferometer.

3. A variable-ratio optical splitter according to claim 2, wherein the predetermined intensity state is selected from at least $N + 1$ predetermined intensity states.

4. A variable-ratio optical splitter according to claim 1 comprising

   a monitor for monitoring intensity of a sub-beam emerging from an output port from the $N$ output ports and for providing feedback, wherein the controller is for changing the optical path length of at least one waveguide arm in dependence upon the feedback, the change for maintaining an intensity of the monitored sub-beam within predetermined limits.

5. A variable-ratio optical splitter according to claim 1, wherein the variable-ratio optical splitter is characterized by a system of $N$ non-linear equations in the form of a matrix algebra model, the variable-ratio optical splitter comprising:

   a processor for determining values relating to a change in optical path length of the waveguide arms by solving the matrix algebra model based upon predetermined intensity ratios, wherein the controller for changing an optical path length is responsive to the determined values and the $N$ non-linear equations comprise the equation:

$$t_{ik} = \frac{1}{N} \sum_{j=1}^{N} e^{j(\varphi_{ij} + \Delta\varphi_j + \varphi_{jk})} \text{ , where } I_k^{out} = |t_{ki}|^2 I_0.$$

6. A method of characterizing an integrated optical Mach-Zehnder interferometer for dividing a beam of light into $N$ sub-beams comprising the steps of:

   (i) launching a beam of light into an input waveguide of the integrated optical Mach-Zehnder interferometer, the integrated optical Mach-Zehnder interferometer comprising a first $P \times N$ multimode interference coupler having $P$ input ports and $N$ output waveguides, and a second $N \times N$ multimode interference coupler having $N$ input waveguides and N output ports, wherein the $N$ output waveguides of the first $P \times N$ multimode interference coupler are optically coupled with the $N$ input waveguides of the second $N \times N$ multimode interference coupler thereby forming $N$ waveguide arms, $N$ is greater than 2, and $P$ is less than or equal to $N$;

   (ii) measuring light distribution from the $N$ output ports of the second $N \times N$ multimode interference coupler; and

(iii) providing the measured light distribution to a suitably programmed processor for processing the measured light distribution to determine relative optical path length differences between the $N$ waveguide arms of the integrated optical Mach-Zehnder interferometer.

7. A method of characterizing an integrated optical Mach-Zehnder interferometer for dividing a beam of light into $N$ sub-beams according to claim 6, wherein the step (iii) comprises the step of:

using the suitably programmed processor for solving a system of $N$ non-linear equations to determine calibration values, the calibration values for compensating for relative optical path length differences in the $N$ arms, wherein the system of $N$ non-linear equations is solved using a matrix algebra model of the equation:

$$t_{ik} = \frac{1}{N} \sum_{j=1}^{N} e^{j(\varphi_{ij} + \Delta\varphi_j + \varphi_{jk})} \text{, where } I_k^{out} = |t_{kl}|^2 I_0.$$

8. An optical switch for routing a beam of light from a first input port to a selected output port, the optical switch comprising:

a $Z$ x $T$ optical switch having $Z$ input ports including the first input port and $T$ output ports;

an integrated optical Mach-Zehnder interferometer comprising a first $N$ x $N$ multimode interference coupler having $N$ input ports and $N$ output waveguides, at least two of the $N$ input ports coupled to at least two of the $T$ output ports of the $Z$ x $T$ optical switch, and a second $N$ x $N$ multimode interference coupler having $N$ output ports including the selected output port and $N$ input waveguides, wherein $N$ output waveguides of the first $N$ x $N$ multimode interference coupler are optically coupled with $N$ input waveguides of the second $N$ x $N$ multimode interference coupler thereby forming $N$ waveguide arms; and

an optical path length changer for changing an optical path length of at least one of the N waveguide arms, wherein $N$ is an even value greater than 3, and $T$ is at least 2, such that the beam of light is launched into the first input port and emerges substantially from the selected output port.

9. An optical switch for routing a beam of light from an input port to a selected output port according to claim 8, wherein at least one of the $T$ output ports is coupled to an input port of the $N$ input ports selected from input ports of the group $k_1$ and another of the $T$ output ports is coupled to an input port of the $N$ input ports selected from the group $k_2$;
wherein the group $k_1$ consists of input ports from the $N$ input ports that, when numbered sequentially along an open path from 1 to $N$, have port numbers that when divided by 4 have a remainder from the group of 1 and 4 and, wherein the group $k_2$ consists of input ports from the $N$ input ports that, when numbered sequentially along an open path from 1 to $N$, have port numbers that when divided by 4 have a remainder from the group of 2 and 3.

10. An optical switch comprising:

an integrated optical $N \times N$ Mach-Zehnder interferometer, $N$ being greater than 2, the integrated optical Mach-Zehnder interferometer comprising a first $N \times N$ multimode interference coupler having $N$ first ports and $N$ second waveguides, and a second $N \times N$ multimode interference coupler having $N$ first waveguides and $N$ second ports, wherein $N$ second waveguides of the first $N \times N$ multimode interference coupler are optically coupled with $N$ first waveguides of the second $N \times N$ multimode interference coupler thereby forming $N$ waveguide arms;

optical path length changers for changing an optical path length of at least 2 of the $N$ waveguide arms; and

a $P \times P$ optical switch having $P$ second ports and $P$ first ports, $P$ being at least 2 and less than $N$, at least 2 of the $P$ second ports optically coupled to at least 2 of the $N$ first ports.

Figure 1.

Figure 2.

EP 0 933 963 A2

Figure 3

Figure 4

EP 0 933 963 A2

60

Inputs $i$

50

5$j$

50

Outputs $k$

1 — 4 x 4 Non-Blocking — 1

2 — — 2

3 — — 3

4 — — 4

8 x 8 GMZl

5 — 4 x 4 Non-Blocking — 5

6 — — 6

7 — — 7

8 — — 8

4 x 4 Non-Blocking

4 x 4 Non-Blocking

50

50

Figure 5

EP 0 933 963 A2

30b
$K \times K$
MMI Coupler two

30a
$K \times K$
MMI Coupler one

$k_2$    $k_1$

$k_2$    $k_1$

1

2

3

4

5

6

7

8

1

2

3

4

5

6

7

8

Figure 6

62b
_K x K_
MMI Coupler two

62a
_K x K_
MMI Coupler one

Figure 7

EP 0 933 963 A2

Figure 8

EP 0 933 963 A2

# Figure 9

| Required 1 x 2 GMZI phase shift $\Delta P$ ($\times \pi$) | 0 | 1 |
|---|---|---|
| Resulting 1 x 2 GMZI states | (1,2) CROSS | (1,1) BAR |
| Binary control bit X | 0 | 1 |

| Required 4 x 4 GMZI phase shifts $\left( \times \frac{\pi}{2} \right)$ | | 0 | 1 |
|---|---|---|---|
| | $\Delta P_1$ | 0 | 1 |
| | $\Delta P_2$ | 1 | 0 |
| | $\Delta P_2$ | 1 | 0 |
| | $\Delta P_1$ | 0 | 1 |
| Resulting 4 x 4 GMZI states | | (1,1) (2,3) | (1,4) (2,2) |
| Binary control bit Y | | 0 | 1 |

| Output | Control Word XY |
|---|---|
| 1 | 1 0 |
| 2 | 0 1 |
| 3 | 0 0 |
| 4 | 1 1 |